# EUROPEAN PATENT APPLICATION

(11) **EP 4 826 509 A2**
(43) Date of publication of application: **21.10.2026**
(21) Application number: 26196983.6
(22) Date of filing: 03.09.2021
(51) Int. Cl.: G06F 3/06

(54) **EFFICIENTLY STORING DATA IN A CLOUD STORAGE**

(30) Priority: 04.09.2020 US 202063074682 P; 13.08.2021 US 202117402198; 13.08.2021 US 202117402206
(62) Document number(s) of the earlier application(s) in accordance with Art. 76 EPC: 25164828.3 / 4 567 579; 21786661.5 / 4 208 777
(71) Applicant: Cohesity, Inc., Santa Clara, California 95054 (US)
(72) Inventor: GUPTA, Anubhav, Santa Clara, 95054 (US); YARLAGADDA, Praveen Kumar, Santa Clara, 95054 (US); GUTURI, Venkata Ranga Radhanikanth, Santa Clara, 95054 (US); QIU, Zhihuan, Santa Clara, 95054 (US); AGARWAL, Sarthak, Santa Clara, 95054 (US)
(74) Representative: EIP

(57) **Abstract**

A specification of content to be stored in a cloud storage is received at a client-side component. A portion of the content is divided into a one or more batches of data chunks. It is determined whether a batch size of the one or more batches of data chunks meets a threshold size. Based on the determination of whether the batch size meets the threshold size, batches of data chunks may be sent either directly to the cloud storage or via the network.

## Description

### BACKGROUND OF THE INVENTION

A data management service may be used to enable an entity (e.g., enterprise, organization, government, company, user, individual, etc.) to manage data associated with the entity. The data management service may allow the entity to manage the data using one or more cloud services provided by a cloud service provider, more particularly by copying data from its datacenter to the cloud storage. The data may be copied directly to the cloud storage, or may be copied indirectly via a data plane. Such copying may lead to an inefficient use of the cloud storage.

US 2016/352833 A1 describes methods and systems for selecting a transport mechanism and a storage process for transmitting and storing data items.

### BRIEF DESCRIPTION OF THE DRAWINGS

Various embodiments of the invention are disclosed in the following detailed description and the accompanying drawings.
FIG. 1 is a block diagram illustrating a system for storing data in a cloud storage in accordance with some embodiments.
FIG. 2 is a flow diagram illustrating a process for backing up data to a cloud storage in accordance with some embodiments.
FIG. 3 is a flow diagram illustrating a process for determining which data chunks to back up to a cloud storage in accordance with some embodiments.
FIG. 4 is a flow diagram illustrating a process for writing data chunks to cloud storage in accordance with some embodiments.
FIG. 5 is a flow diagram illustrating a process for generating metadata in accordance with some embodiments.
FIG. 6 is a flow diagram illustrating a process for managing a deduplication table in accordance with some embodiments.
FIG. 7 is a timing diagram illustrating exchanges of data within a distributed system such as the system of FIG. 1 in accordance with some embodiments.
FIG. 8 is a timing diagram illustrating exchanges of data and metadata within a distributed system such as the system of FIG. 1 in accordance with some embodiments.
FIG. 9 is a flow diagram illustrating a process for updating a cloud storage element object in accordance with some embodiments.
FIG. 10 is a flow diagram illustrating a process for updating a cloud storage element object in accordance with some embodiments.

### SUMMARY

According to a first aspect, there is provided a method as defined by appended claim 1. According to a second aspect, there is provided a cloud server as defined by appended claim 14. According to a third aspect, there is provided a computer readable medium as defined by appended claim 15.

### DETAILED DESCRIPTION

Techniques to efficiently store data in remote storage, such as a cloud storage, are disclosed herein. Remote storage, such as cloud storage, may comprise storage at which data from an entity may be stored but that is at a different location to the entity, and therefore is accessible via a network between the entity and the cloud storage. Data stored in cloud storage may be accessible by the entity via the network. Characteristics of the remote storage, such as data availability and data durability of the data stored therein, may differ between different types of remote storage. The entity may store data in the remote storage for one or more of a plurality of different reasons, and the type of remote storage used may be chosen based on the reason and associated characteristics. For example, remote storage with a low availability but a high durability may be used for archiving data for long periods of time because the data is not expected to be accessed repeatedly but is required to be maintained for the period for which it is archived. In another example, remote storage with a lower data durability but a higher availability may be used where an entity is likely to desire frequent access to the data. Generally, there may be a compromise between particular characteristics of the storage, and this compromise may also include the need to quickly complete the action of storing the data. The costs levied by the operator of the remote storage may also be a factor in which type of remote storage is used.

Storing data in remote storage is useful where local storage is unavailable or inadequate for the needs of the entity. Remote storage, such as cloud storage offered by, for example, Amazon Web Services (AWS), Microsoft Azure or Google Cloud, enable entities to make use of greater amounts of storage than may otherwise be available to them. An entity may have a distributed structure, such that datacenters of the entity operate a plurality of different source systems at different locations. However, for efficiency and ease of management of storage, the entity may utilize remote storage at different locations to the datacenters, or at fewer datacenters than the number in which the entity operates. While remote storage may have a greater capacity than local storage, there is still a need to make efficient use of the remote storage, both by efficiently using the space available to the entity at the remote storage and by efficiently providing data from datacenters. There is also a need to ensure that the data is stored in a manner by which it can be efficiently accessed and used at a later date, if required.

In some examples disclosed herein, a remote storage system may include different types of remote storage. For example, a remote storage system may include a first remote storage and a second remote storage. The first remote storage may have a higher durability than the second remote storage. Where a cloud storage service is used, such as AWS, the first remote storage may be in the form of cloud storage, such as S3 storage, and the second remote storage may be provided by a cloud server, such as EC2 instance. The cloud server may also include processing resources to enable analysis or organization of the data to be performed. For example, the cloud server may include one or more components or engines configured to perform data management services. The cloud server may operate in a so-called data plane.

References to cloud storage and cloud server storage are used throughout the description below. However, the techniques described in relation to cloud storage and cloud server storage below are applicable to other forms of remote storage system comprising at least two types of remote storage and processing capabilities. Accordingly, references to cloud storage below may be understood to be references to first remote storage and references to cloud server storage may be understood to be references to second remote storage. The data plane, which may include a cloud server and the cloud server storage, may be considered to be a remote computing system. It will be appreciated that although the description below and the accompanying figures illustrate the cloud storage and data plane as being part of the same system, in other examples they may be remote from one another.

One technique to efficiently store data in a cloud storage includes reducing the amount of data that is associated with an entity and that is stored in the cloud storage by deduplicating the data associated with the entity stored in the cloud storage. A cloud storage provider may provide cloud storage for a plurality of entities. Each of the entities may be referred herein to as a "storage tenant."

A data plane may be configured to perform one or more data management services (e.g., backup, tiering, replication, migration, etc.) and control how data associated with a storage tenant is stored in the cloud storage. For example, the data plane may include a backup engine that is configured to determine when a source system associated with the storage tenant is to perform a backup, a tiering engine that is configured to determine when an object is to be tiered from the source system to cloud storage, and/or a replication engine that is configured to determine when data content is to be replicated from the source system to cloud storage. The source system may be part of a datacenter that includes a client-side component. The client-side component may be a virtual machine, a container, a server, an application, etc. The client-side component may be configured to establish and securely communicate with the data plane via a bidirectional network connection (e.g., gRPC (gRPC remote procedure call) connection). The data plane may be configured to communicate with a plurality of client-side components. The cloud storage may also be configured to receive data from the plurality of client-side components. The client-side components may be distributed between a plurality of datacenters or may be present in one datacenter. A client-side component may correspond to a particular source system. In some examples, a datacenter may comprise a plurality of client-side components and/or a storage tenant may have a plurality of datacenters each having a client-side component. A specification of content may be received or determined by each client-side component. A datacenter may be a distributed system, whereby the components of the datacenter operate on different, networked computers. The components may communicate by a network, such as a local network or a wider network such as the internet. In some embodiments, a datacenter may be an integrated system, whereby components such as the source system and client-side component operate on the same computer. In some embodiments the datacenter may be a virtual datacenter and may be housed in cloud storage and operate at a cloud server that is different from the cloud storage to which backups are performed.

The client-side component may receive from the backup engine a specification of content to be backed up from the source system to the cloud storage. In some embodiments, the specification of content describes a full backup of the source system. In some embodiments, the specification of content describes an incremental backup of the source system. In some embodiments, the specification of content describes a full backup of an object included in the source system (e.g., virtual machine, container, application, storage cluster). In some embodiments, the specification of content describes an incremental backup of an object included in the source system. In some embodiments, the specification of content describes a storage tier for one or more objects stored on the source system (e.g., one or more files, one or more virtual machines, one or more containers, one or more applications, one or more databases, etc.). For example, a backup of a file stored on the source system may be tiered to a first performance storage class associated with a cloud storage, a second performance storage class associated with the cloud storage, or a third performance storage class associated with the cloud storage.

The client-side component may receive from a tiering engine a specification of content to be tiered from a source system to the cloud storage. In some embodiments, the client-side component determines a specification of content to be tiered from the source system to the cloud storage. In some embodiments, the specification of content describes a storage tier for one or more objects stored on the source system. For example, a file stored on the source system may be tiered from the source system to a first performance storage class associated with a cloud storage, a second performance storage class associated with the cloud storage, or a third performance storage class associated with the cloud storage. In some examples, where a storage tenant has a plurality of client-side components, a respective specification of content may be received or determined by each client-side component.

The client-side component may receive from a replication engine a specification of content to be replicated from source system to the cloud storage. In some embodiments, the specification of content describes a storage tier for one or more objects stored on the source system. For example, a file stored on the source system may be replicated from the source system to a first performance storage class associated with a cloud storage, a second performance storage class associated with the cloud storage, or a third performance storage class associated with the cloud storage. In some examples, where a storage tenant has a plurality of client-side components, a specification of content may be received or determined by each client-side component.

The client-side component may be configured to request and receive the content specified in a specification of content in a plurality of portions from the source system. A received portion may include source system metadata associated one or more objects stored on the source system (e.g., owner, created, last update, size, permissions, etc.) and/or data content associated with the one or more objects stored on the source system. For each received portion of content, the client-side component divides the received portion of content into a plurality of data chunks. In some embodiments, a specification of content to be stored in the cloud storage is received from a backup engine. In some embodiments, a specification of content to be stored in the cloud storage is received from a source system. In some embodiments, the plurality of data chunks are of variable size. The client-side component may generate corresponding chunk identifiers (e.g., secure hash algorithm 1 (SHA-1) identifier) for each of the plurality of data chunks included in a portion of received content. Data chunk metadata that includes the corresponding chunk identifiers is sent to a file system manager that is included in a cloud server of the data plane. For each data chunk, the data chunk metadata may also include a corresponding data chunk size and a corresponding object offset. The data chunk metadata indicates a sequence of data chunks within an object. For example, the data chunk metadata may indicate that a first data chunk having a chunk identifier of C1 is associated with an object offset of 0 MB - 1 MB and has a data chunk size of 1 MB, a second data chunk having a chunk identifier of C2 is associated with an object offset of 1 MB - 2 MB and has a data chunk of 1 MB, ..., and an 8th data chunk identifier of C8 is associated with an object offset of 7 MB - 8 MB and has a data chunk size of 1 MB.

In response to receiving the corresponding chunk identifiers for each of the plurality of data chunks, the file system manager is configured to compare each of the corresponding chunk identifiers to chunk identifiers included in a deduplication table stored at the data plane. The chunk identifiers included in the deduplication table indicate at least some of the data chunks associated with the storage tenant that are already stored in the cloud storage. If the client-side component were to write to the cloud storage data chunks that are already stored at the cloud storage, then the cloud storage would store duplicate copies of the same data chunks, which is an inefficient use of the cloud storage.

The file system manager is configured to provide a data structure to the client-side component. In some embodiments, the data structure indicates one or more data chunks requested by the file system manager (e.g., the one or more chunk identifiers of the one or more received chunk identifiers that do not correspond to data chunks stored at the cloud storage). In some embodiments, the data structure indicates the one or more chunk identifiers that correspond to one or more data chunks that are stored at the cloud storage, but the one or more chunk identifiers associated with the one or more data chunks that are stored at the cloud storage are not included in deduplication table due to one or more factors, such as whether the data chunk is referenced by a tree data structure that was generated after a particular date, a recency of when the data chunk was last deduplicated, a frequency at which the data chunk is deduplicated, a service level agreement, a storage tier of a data chunk, etc. In response to receiving the data structure, the client-side component is configured to use the data structure to identify the one or more data chunks of the portion of the received content that are to be sent to be stored at the cloud storage.

The file system manager may also send to the client-side component a reference to one or more portions of one or more cloud storage element objects of the cloud storage to which the client-side component may write the one or more data chunks associated with the one or more chunk identifiers included in the data structure. The reference may include corresponding identifiers for the one or more cloud storage element objects. In some embodiments, the one or more cloud storage element objects include one or more new cloud storage element objects, one or more existing cloud storage element objects, and/or one or more cloud storage element objects yet to be created. In some embodiments, the reference may comprise one or more identifiers which the client-side component may use to create new cloud storage element objects of the cloud storage.

The client-side component may receive an encryption key from a cloud server that is located in the data plane. The cloud server may include an encryption key manager that manages encryption keys for a plurality of storage tenants. The received encryption key is particular to the storage tenant. In some embodiments, the encryption key enables read access for a cloud storage element object associated with the storage tenant at a credential level or write access for a new cloud storage element object associated with the storage tenant at a credential level to prevent overwriting or deleting of existing files. That is, write access is not permitted for existing files. For example, some cloud storage element objects may each have a unique credential. In some embodiments, the encryption key enables read or write access for a cloud storage element object associated with the storage tenant at a prefix level. For example, a prefix may be a partial or full file path in the cloud storage. A prefix may be unique to a storage tenant. Some or all cloud storage element objects of a particular storage tenant may be stored in cloud storage and share a prefix. The encryption key may expire after a particular amount of time. A source system associated with the storage tenant may be hacked and having the encryption key expire after the particular amount of time may prevent a hacker from accessing any of the cloud storage element objects associated with the storage tenant that are stored at the cloud storage.

In other words, a client-side component at a datacenter may determine data to be stored at the cloud storage (first remote storage). The data may be received from a source system at the datacenter and data chunks may be created for the received data. The data chunks are assigned identifiers by the client-side component that enable the data to be uniquely identified by the client-side component and by the data plane and its associated cloud server (remote computing system), which is separate to the cloud storage. Data chunk metadata is sent from the client-side component to the data plane and its associated cloud server. The data plane is configured to determine which of the data chunks are not already stored at the cloud storage based on the data chunk metadata. In return, the client-side component receives from the data plane an indication of the data chunks that are not already stored at the cloud storage. The client-side component may also receive an indication of a location in the cloud storage at which to store them. The location may be indicated with reference to a cloud storage element object, in which the chunks are to be stored. The cloud storage element object may be an existing cloud storage element object or a new cloud storage element object. New cloud storage element objects may be assigned an object identifier, assigned to the object by a generator in the data plane. New cloud storage element objects may be assigned an object identifier even if they are empty of data chunks. The client-side component may then cause the chunks indicated by the data plane to be stored at the location in the cloud storage indicated by the data plane and its associated cloud server.

Importantly, this technique ensures that duplication of chunks is avoided, thereby improving the efficiency with which the data is stored at the remote system. Furthermore, the above techniques reduce the amount of data exchanged between different systems, by reducing the amount of data to be sent to cloud storage, and by reducing the amount of data exchanged in order to decide which data to store. By sending only data chunk metadata to the data plane rather than the data chunks themselves, a smaller amount of data transfer is achieved. By determining which chunks are missing, a smaller amount of data chunks are transferred to cloud storage. Accordingly, the data being backed up is stored in its entirety in the cloud storage in a fast and efficient manner.

Furthermore, utilizing the data plane to receive the data chunk metadata and determine which chunks are to be stored in the cloud storage, improves the efficiency of the system as a whole. This is firstly because the data chunk metadata is not persisted locally at the datacenter, where it may be taking up valuable memory and other resources in the datacenter. Further improvements are seen where a plurality of client-side components are in communication with the data plane and send data chunk metadata to the data plane for determining which chunks are missing from the cloud storage. The data plane improves efficiency in this way by acting as a central system that analyses the data chunk metadata and ensures that duplication of data chunk metadata and / or data chunks is avoided when what turns out to be the same data chunk is identified by two or more different client-side components. This may be referred to as global deduplication, as the data plane ensures that deduplication is performed for data from a plurality of different source systems and client-side components.

Another technique to efficiently store data in the cloud storage includes combining a plurality of the identified data chunks into one or more batches. In some embodiments, a default size of a cloud storage element object is specified (e.g., 8 MB). The default size may depend on an amount of memory available at the client-side component for temporarily holding the data chunks. For example, where the client-side component is a virtual machine, specific memory and processing resources may be dedicated to the virtual machine. The resources dedicated to the virtual machine indicate a maximum amount of data chunks that may be stored at and handled by the virtual machine at any one time. Accordingly, a default size may be specified to ensure that batches are created and dispatched to ensure the resources of the client-side component are not overloaded. The default size may also depend on how objects are stored at the cloud storage, and may also depend on how metadata may be stored at a cloud server storage. Having a default size that is relatively small creates more cloud storage element objects than are created when the default size is relatively large, which is inefficient because a relatively large number of cloud storage element objects will require more calls to access the data than will be required for relatively fewer cloud storage element objects. Accordingly, the default size may be considered to be a balance between efficient storage at, and calls to, the cloud storage and use of resources at the client-side component.

In some embodiments, a size of a batch of data chunks is the default size of the cloud storage element object. Storing this particular batch of data chunks at the cloud storage is an efficient use of the cloud storage. In some embodiments, a size of a batch of data chunks is less than the default size of the cloud storage element object, but greater than or equal to a threshold size. As mentioned above, this is a sub-optimal configuration of the cloud storage due to overheads associated with future operations on the cloud storage element objects. For example, storing a large number of cloud storage element objects associated with an object that are less than the default size increases the number of reads needed to restore the object, which increases the overall amount of time needed to restore the object. In some embodiments, a size of a batch of data chunks is less than the default size of the cloud storage element object and less than the threshold size. Storing batches of data chunks that are less than the default size of the cloud storage element object and less than the threshold size may incur relatively high overheads. This is because storing a large number of cloud storage element objects associated with an object that are less than the threshold size further increases the number of reads needed to restore the object, which increases the overall amount of time needed to restore the object.

In some embodiments, a default range size of a cloud storage element object is specified (e.g., 4 MB - 12 MB). In some embodiments, the size of a batch of data chunks is within the default size range of a cloud storage element object. In some embodiments, the size of a batch of data chunks is not within the default size range of a cloud storage element object.

Prior to writing a batch of data chunks to a cloud storage element object that was indicated by the file system manager of the data plane, the client-side component may compare a batch size of a batch to a threshold size (e.g., 4 MB) or a default size range (e.g., 4 MB - 12 MB). Cloud storage element objects that have a size that is less than the threshold size or outside the default size range may require additional application programming interface (API) calls to access the cloud storage element objects, which may add to the overall time and resources needed to perform a data management function (e.g., garbage collection, deduplication, replication, backup, etc.).

In the event the batch size of a batch is greater than or equal to the threshold size, the client-side component may encrypt the data chunks included in the batch with the received encryption key and write the encrypted data chunks to one of the cloud storage element objects identified by the file system manager. In some embodiments, the data chunks are compressed prior to being encrypted. An index may be updated to indicate which data chunks are included in the cloud storage element object. In some cases, the index may indicate the relative position of data chunks in the cloud storage element object. The index may include an object id and a version number. The index may be included in the cloud storage element object. In some embodiments, the client-side component generates a cloud storage element object identified by the file system manager. In some embodiments, a cloud storage generates the cloud storage element object identified by the file system manager.

In the event the batch size of the batch is not greater than or equal to the threshold size, the client-side component may determine whether a batch period greater than or equal to a batch threshold period has passed. The client-side component may store in-memory the data chunk(s) included in the batch for the batch threshold period (e.g., <1 seconds) to allow additional data chunks to be included in the batch.

In the event the batch period is not greater than or equal to the batch threshold period, the client-side component processes a subsequent portion of the specified content to identify one or more data chunks of the subsequent portion of the specified content that are to be stored in the cloud storage. The one or more data chunks of the subsequent portion are combined with the one or more data chunks of the previous portion to generate a new batch of data chunks. The client-side component determines whether a size of the new batch of data chunks is greater than the threshold size. If it is, then the client-side component determines whether the batch period is greater than or equal to the batch threshold period. If it is not, then the above process repeats until the batch threshold period is greater than or equal to the batch threshold period.

In the event the batch period is greater than or equal to the batch threshold period, the client-side component may write the one or more data chunks included in the batch to a storage of a cloud server included in the data plane, even if the size of the batch written to the storage is less than the threshold size. In response to receiving the one or more data chunks, the file system manager of the cloud server may aggregate the one or more received data chunks with one or more other received data chunks. Data chunks may be received by the cloud server from a one or plurality of client-side components associated with the storage tenant. The file system manager may aggregate data chunks received from a plurality of client-side components. The file system manager may determine whether a cumulative size of the aggregated data chunks is greater than the threshold size and less than a maximum size for a cloud storage element object. In the event the cumulative size of the aggregated data chunks is greater than the threshold size and less than the maximum size for the cloud storage object, the file system manager may batch the aggregated data chunks into a cloud storage element object, encrypt the batched data chunks using an encryption key particular to the storage tenant, and write the batched data chunks to a cloud storage element object associated with the cloud storage. This is an efficient use of the cloud storage because instead of storing the one or more received data chunks in a first cloud storage element object and storing the one or more other received data chunks in a second cloud storage element object, the one or more received data chunks and the one or more other received data chunks are stored in a single cloud storage element object.

In some embodiments, the cloud storage element object associated with the cloud storage is a new cloud storage element object. In some embodiments, the cloud storage element object associated with the cloud storage is a cloud storage element object that is yet to be created. In some embodiments, the cloud storage element object associated with the cloud storage is an existing cloud storage element object. In the event the cloud storage element object associated with the cloud storage is an existing cloud storage element object, the file system manager may read the data chunks associated with the existing cloud storage element object, combine the read data chunks with one or more new data chunks to generate a new version of the cloud storage element object, create an index for the new version of the cloud storage element object, and include the index in the new version of the cloud storage element object. In some embodiments, multiple threads write to the same cloud storage element object. In some cases, the index may indicate the relative position of data chunks in the cloud storage element object. The index may include an object id and a version number.

In the event the cumulative size of the aggregated data chunks is not greater than the threshold size, the file system manager may determine if the total time that the one or more received data chunks have been stored in a storage of a cloud server included in the data plane is greater than a threshold time. In the event the total time is greater than the threshold time, then the file system manager may batch the one or more received data chunks and one or more other received data chunks, if any, encrypt the batched data chunks using an encryption key particular to the storage tenant, and write the batched data chunks to a cloud storage element object associated with a cloud storage. While this may cause an increase in overheads, such as computing resources, associated with future operations on the cloud storage element objects because operations on small cloud storage element objects are inefficient, transferring the data to cloud storage ensures that the data is more resiliently and reliably stored at the cloud storage, and ensures swift completion of the process of storing the data in cloud storage. The storage of the cloud server (e.g., EC2 instance) may have a data durability, which may also be referred to as reliability, which is lower than the durability of cloud storage (e.g., S3). For example, the storage of the cloud server may have a data durability of 99.99%, or '4 nines', while the cloud storage may have a data durability of 99.999999999%, or '11 nines'. The durability expresses a percentage of objects that will not be lost on average during a year. In other words, a data durability of 4 nines corresponds to an average annual expected loss of 0.01% of objects stored in that particular storage. For a data durability of 11 nines, the average annual expected loss is 0.000000001% of objects stored in that storage.

The one or more data chunks may be written to a cloud storage element object stored at the cloud storage to ensure that the one or more data chunks are not lost in the event the storage of the cloud server fails. In some embodiments, the cloud storage element object associated with the cloud storage is a new cloud storage element object. In some embodiments, the cloud storage element object associated with the cloud storage is a cloud storage element object yet to be created. In some embodiments, the cloud storage element object associated with the cloud storage is an existing cloud storage element object. In the event the cloud storage element object associated with the cloud storage is an existing cloud storage element object, the file system manager may read the data chunks associated with the existing cloud storage element object, combine the read data chunks with one or more new data chunks to generate a new version of the cloud storage element object, create an index for the new version of the cloud storage element object, and include the index in the new version of the cloud storage element object.

The technique described above may involve sending batches of data chunks directly to the cloud storage or indirectly to the cloud storage via the cloud server storage depending on the size of the batch. As explained above a plurality of client-side components may be associated with the storage tenant, and each of the plurality of client-side components may be configured to send batches of data to the cloud storage according to the process described above. During this process, it will be appreciated that different chunks of data may be stored in different locations of the cloud storage due to arriving as part of different cloud storage element objects, being aggregated with data chunks from different points in time, and, if applied, due to the deduplication process also described above, meaning that data chunks associated with a particular backup may be distributed throughout the cloud storage in different cloud storage element objects.

The data plane may be configured to receive, from the client-side component, one or more chunk identifiers and one or more indications of cloud storage element objects in which the chunks corresponding to the chunk identifiers are stored in the cloud storage. An indication of a cloud storage element object may comprise an identifier of the cloud storage element object. Identifiers of one or more cloud storage objects may have been previously provided to the client-side component by the data plane in response to a request from the client-side component for the identifier. The chunk identifiers and the indication may be received by the data plane as part of data chunk metadata. Data chunk metadata may therefore be sent to the data plane in relation to deduplication and in relation to storage of data chunks in cloud storage element objects. Where data chunk metadata is sent to the data plane in relation to storage of data chunks in cloud storage element objects, it may include the indication of the cloud storage element object or objects in which specific data chunks are stored. In some embodiments, the data chunk metadata may include chunk identifiers for all data chunks received by the client-side component rather than just the chunk identifiers that were stored in the cloud storage, as including all the data chunks may be useful with regards to operations that make use of a sequence of the data chunks.

The data plane may also have provided to the client-side component a URL that provides access to a resource, such as an API or a webpage, via which chunks may be uploaded to a cloud storage element object. An expiry time may be associated with the URL and the resource that it provides access to, after which the URL may no longer be used to access the resource and/or after which the resource may no longer be used to upload chunks to the cloud storage element object. The expiry time may also be provided to the client-side component by the data plane. The resource may have a restriction that data stored in cloud element storage objects may not be obtained through it, meaning that anyone who happens to have the URL and did not receive it from the data plane cannot determine or access what is stored in the cloud storage element object.

Metadata may be generated at the data plane. As described below, this may be performed by a file system manager, and will be referred to hereafter as file system metadata. The data plane may be configured to generate the file system metadata by generating or updating a data structure, such as a tree data structure, i.e. a snapshot tree, based on the data chunk metadata. The data structure may keep track of where the different data chunks are stored. A data structure, such as a snapshot tree, may indicate where data chunks relating to an object (i.e. a content file) are stored. The data plane may generate file system metadata by updating the data structure to indicate, for each data chunk that was stored in a cloud storage element object, the cloud storage element object that the chunk is stored in. The data plane may also be configured to store the data structure in a cloud storage element object.

When receiving batches from the client-side component, the data plane may determine whether the batch can be aggregated with another batch or batches received from the client-side component or another client-side component. If the data plane can combine the batches to create an aggregated batch that has a size that is above the batch threshold, then it may write the aggregated batch to the cloud storage in a cloud storage element object, optionally without creating a local file in the cloud server storage for the batch. The data structure that keeps track of where the data chunks for an object are stored may be updated to refer to the cloud storage element object in which the chunks of the aggregated batches have been stored. If the data plane does not have batches of the correct size to combine to meet the threshold size, it may create a local file for the received batch, and update the data structure to indicate where the local file is stored at the cloud server storage. This avoids unnecessarily storing and creating metadata where it is not necessary.

The data plane may receive data chunk metadata from the client-side component for chunks that have been written to the cloud storage and batches of data chunks that are smaller than the batch threshold size. Therefore, the data plane may receive data chunk metadata relating to batches of data chunks that are stored at the cloud storage and batches of data chunks that have not yet been stored at the cloud storage. The data plane may therefore maintain and update a data structure with reference to data stored at two separate locations, i.e. the cloud server storage and the cloud storage. When the data plane stores an aggregated batch of data chunks in the cloud storage, it may then update the data structure to indicate where the data chunks are now stored in the cloud storage. A backup to the cloud storage may be considered complete when the data structure that keeps track of the last remaining data chunks has been written to the cloud storage. The data plane may retain a copy of the data structure to enable it to locate the data chunks in the cloud storage if a restoration or migration is to be performed.

In other words, the client-side component may send data for storage at the cloud storage, and may send data chunk metadata relating to that data to the data plane, which is a separate system to the cloud storage. The data plane may generate file system metadata and store the file system metadata at the cloud storage. The handling of these types of metadata by the data plane may be performed while the data plane processes data received from the client-side component that do not meet a batch threshold. Accordingly, the data plane may process data and metadata in parallel to ensure that a backup is completed as quickly and efficiently as possible.

The distribution to different systems of the data and data chunk metadata enables the data to be stored in its final location as quickly as possible, minimizing the number of hops that the data has to pass before being stored in cloud storage. The data chunk metadata is sent to the data plane to enable processing and generation of the file system metadata, before it, too, is stored. Both the file system metadata and data relating to an object are backed up to the cloud storage, but the initial distribution of (qualifying) data to cloud storage and data chunk metadata for that data to the data plane enables a greater efficiency of storage and data transfer. Furthermore, when combined with the above batching process, the distribution of data chunk metadata to the data plane has further benefit, in ensuring that the final location in the cloud storage of the data chunks is tracked in the file system metadata generated at the data plane. This is useful because the batching may combine unrelated chunks into a cloud storage element object. In addition, a benefit arises because the chunks in the batches that are below the batch threshold size, which is to say those that are not qualifying, may be sent to the cloud storage at a different time to the other batches and may be stored in a different location, and the data plane is configured to maintain a version of the file system metadata to ensure that the location of these batches is known.

Another technique to efficiently store data in the cloud storage includes monitoring the cloud storage to identify cloud storage objects that are less than a default size or outside of the default range size. A file system manager may scan the cloud storage to identify a cloud storage element object. A size of the cloud storage element object is determined. The determined size is compared to a first threshold size (e.g., 1 MB). In the event the determined size is less than the first threshold size, the file system manager may add the cloud storage element object to a set of one or more cloud storage element objects available for a client-side component to update the cloud storage element with an updated version. The updated version may include previously existing data of the cloud storage element object and additional data. In some embodiments, a size of the updated version of the cloud storage element object is the default size for a cloud storage element object. In the event the determined size is not less than the first threshold size, but less than a second threshold size, the file system manager updates the cloud storage element object with an updated version that includes previously existing data of the cloud storage element object and the new data chunks received from the client-side component.

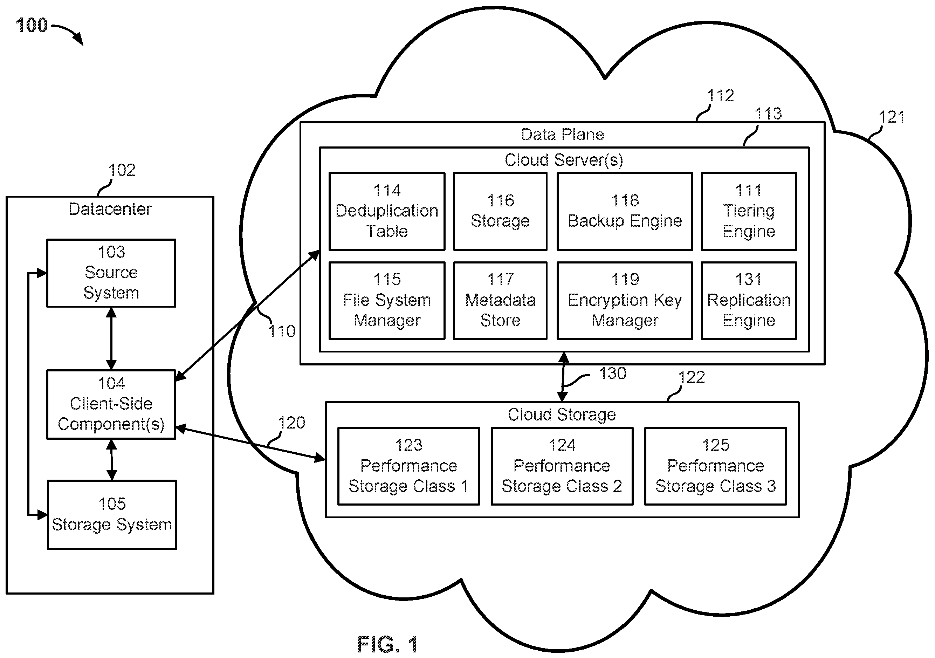

FIG. 1 is a block diagram illustrating of a system for storing data in a cloud storage in accordance with some embodiments. In the example shown, system 100 includes a client-side component 104 that is connected to data plane 112 via connection 110 and connected to cloud storage 122 via connection 120. In some embodiments, connection 110 is a gRPC connection or other type of connection. In some embodiments, connection 120 is a HTTPS connection or other type of connection. In some embodiments, connections 110, 120 may be intermittent connections. The connection between client-side component 104 and data plane 112 or between client-side component 104 and cloud storage 122 may be a wireless or wired connection. In some embodiments, the connection between client-side component 104 and data plane 112 or between client-side component 104 and cloud storage 122 may be a gRPC connection. Connections 110, 120 may communicate data and/or information via a local area network, a wide area network, a storage area network, campus area network, metropolitan area network, system area network, intranet, the Internet, and/or a combination thereof. The data plane 112 is an example of a remote computing system. The cloud storage 122 is an example of a first remote storage, also referred to as a first remote storage location.

One or more client-side components 104 are located in datacenter 102 (e.g., real datacenter or virtual datacenter) that is associated with a storage tenant. In some embodiments, one or more client-side components 104 are located in cloud environment 121, such as in data plane 112. A client-side component may be a virtual machine, a container, a server, an application, etc. The one or more client-side components 104 are connected (e.g., temporarily or persistently) to source system 103. In some embodiments, the one or more client-side components 104 are included in source system 103. In some embodiments, the one or more client-side components are included in a storage system 105. In some embodiments, source system 103 is a primary system. In some embodiments, source system 103 is a secondary storage system that backed up data from other sources (not shown). A primary system may be comprised of one or more computing devices (e.g., servers, desktops, laptops, etc.). Storage system 105 may be comprised of one or more storage nodes that include one or more corresponding processors, one or more corresponding memories, and one or more corresponding storage devices.

In some embodiments, a storage node of storage system 105 includes a processor, memory, and a plurality of storage devices. The plurality of storage devices may include one or more solid state drives, one or more hard disk drives, or a combination thereof. Backed up data may be stored in the one or more solid state drives, one or more hard disk drives, or a combination thereof.

In some embodiments, a storage node of storage system 105 includes a processor and memory, and is coupled to a separate storage device. The separate storage device may include one or more storage devices (e.g., flash storage devices). A storage device may be segmented into a plurality of partitions. Each of the storage nodes may be allocated one or more of the partitions. The one or more partitions allocated to a storage node may be configured to store data associated with some or all of the changed objects that were backed up to the storage system. For example, the separate storage device may be segmented into 10 partitions and the storage system may include 10 storage nodes. A storage node of the 10 storage nodes may be allocated one of the 10 partitions.

In some embodiments, a storage node of storage system 105 includes a processor, memory, and a storage device. The storage node may be coupled to a separate storage device. The separate storage device may include one or more storage devices. A storage device may be segmented into a plurality of partitions. Each of the storage nodes may be allocated one or more of the partitions. The one or more partitions allocated to a storage node may be configured to store data associated with some or all of the changed objects that were backed up to the storage system. For example, the separate storage device may be segmented into 10 partitions and the storage system may include 10 storage nodes. A storage node of the 10 storage nodes may be allocated one of the 10 partitions.

In some embodiments, the storage nodes of the storage system are homogenous nodes where each storage node has the same capabilities (e.g., processing, storage, memory, etc.). In some embodiments, at least one of the storage nodes of the storage system is a heterogeneous node with different capabilities (e.g., processing, storage, memory, etc.) than the other storage nodes of storage system.

Source system 103 includes content (e.g., virtual machines, applications, files, filesystem data, containers, etc.) that is to be backed up to cloud storage 122. A client-side component is configured to receive the content to be backed up from source system 103 and to back up the received content. In some embodiments, the client-side component is configured to back up some or all of the received content to cloud storage 122. In some embodiments, the client-side component is configured to back up some of the received content to storage 116 included in data plane 112. The storage 116 in the data plane 112 is an example of a second remote storage, which is separate to the first remote storage such as the cloud storage 122.

Data plane 112 is configured to orchestrate how data associated with a storage tenant is stored in cloud storage 122. For example, data associated with a storage tenant may be stored in a first performance storage class 123 (e.g., Amazon Simple Storage Service (S3)), a second performance storage class 124 (e.g., Amazon S3 Glacier), or a third performance storage class 125 (e.g., Amazon S3 Glacier Deep Archive). Although FIG. 1 depicts cloud storage 122 as having three performance tiers, cloud storage 122 may have *n* performance tier. Each of the performance tiers corresponds to an object storage provided by a cloud provider (e.g., Amazon Web Services^{™}, Microsoft^{™} Azure, Google Cloud^{™}, etc.) that provides cloud environment 121 (e.g., public cloud, private cloud, hybrid cloud, etc.). The speed at which data may be accessed is different depending on whether the data is associated with the first performance storage class 123, the second performance storage class 124, or the third performance storage class 125.

Data plane 112 includes one or more cloud servers 113 (e.g., one or more EC2 instances). The one or more cloud servers 113 may be associated with corresponding processors, corresponding memory, and corresponding storage. In some embodiments, data plane 112 includes multiple sets of one or more cloud servers 113. For example, data plane 113 may include a first set of one or more cloud servers 113 that is associated with a first region and a second set of one or more cloud servers 113 that is associated with a second region. The one or more cloud servers 113 include a deduplication table 114 that associates chunk identifiers with data chunks stored in cloud storage 122. In some embodiments, deduplication table 114 associates chunk identifiers with data chunks associated with the first performance storage class 123, but not data chunks associated with the second performance storage class 124 or the third performance storage class 125. This may reduce the overall size of deduplication table 114 maintained by file system manager 115. In some embodiments, deduplication table 114 stores chunk identifiers for a portion of the data chunks that are associated with the first performance storage class 123. For example, the chunk identifiers associated with the most popular data chunks (e.g., data chunks referenced by a threshold number of files or objects) or the most recent data chunks (e.g., data chunks that were stored to cloud storage 122 within a particular period of time) may be included in deduplication table 114.

Data plane 112 includes backup engine 118 that is configured to determine when source system 103 is to perform a backup according to a backup policy. The backup policy may indicate a frequency at which a backup is to be performed (e.g., hourly, daily, weekly, etc.), an amount of change data for which a backup is to be performed (e.g., more than 10 GB of changed data), or in response to a user command. Backup engine 118 may provide to the one or more client-side components 104 a specification of content to be backed up from source system 103 to cloud storage 122. In some embodiments, the specification of content describes a full backup of source system 103. In some embodiments, the specification of content describes an incremental backup of source system 103. In some embodiments, the specification of content describes a full backup of an object included in source system 103 (e.g., virtual machine, container, application). In some embodiments, the specification of content describes an incremental backup of an object included in source system 103. In some embodiments, the specification of content describes a storage tier for one or more objects stored on source system 103. For example, a backup of a file stored on source system 103 may be tiered to the first performance storage class 123, the second performance storage class 124, or the third performance storage class 125.

Data plane 112 includes tiering engine 111. A client-side component may receive from tiering engine 111 a specification of content to be tiered from source system 103 to cloud storage 122. In some embodiments, the specification of content describes a storage tier for one or more objects stored on source system 103. For example, a file stored on source system 103 may be tiered from source system 103 to a first performance storage class 123, a second performance storage class 124, or a third performance storage class 125.

Data plane 112 includes replication engine 131. A client-side component may receive from replication engine 131 a specification of content to be replicated from source system 103 to cloud storage 122. In some embodiments, the specification of content describes a storage tier for one or more objects stored on source system 103. For example, a file stored on source system 103 may be replicated from source system 103 to a first performance storage class 123, a second performance storage class 124, or a third performance storage class 125.

The one or more client-side components 104 are configured to receive the content in a plurality of portions from source system 103. For each received portion of content, a client-side component divides the received portion of content into a plurality of data chunks. In some embodiments, a specification of content to be stored in cloud storage 122 is received from backup engine 118. In some embodiments, a specification of content to be stored in cloud storage 122 is received from source system 103. In some embodiments, the plurality of data chunks may be of variable size. The one or more client-side components 104 may generate corresponding chunk identifiers (e.g., SHA-1 identifier, SHA-2 identifier, SHA-256 identifier, etc.) for each of the plurality of data chunks included in a portion of received content.

A client-side component may identify one or more data chunks of the plurality of data chunks that are to be sent via network connection 120 to cloud storage 122 at least in part by sending to file system manager 115 the corresponding chunk identifiers for each of the plurality of data chunks included in a portion of received content. In response to receiving the corresponding chunk identifiers for each of the plurality of data chunks, file system manager 115 is configured to compare each of the corresponding chunk identifiers to chunk identifiers included in deduplication table 114. The chunk identifiers included in deduplication table 114 indicate at least some of the data chunks that are stored in cloud storage 122.

File system manager 115 is configured to provide the client-side component a data structure that indicates the one or more chunk identifiers of the one or more received chunk identifiers that are not included in deduplication table 114. In some embodiments, the one or more chunk identifiers not included in deduplication table 114 correspond to data chunks that are not stored at cloud storage 122. In some embodiments, the one or more chunk identifiers not included in the deduplication table correspond to one or more data chunks that are stored at cloud storage 122, but the one or more chunk identifiers associated with the one or more data chunks that are stored at cloud storage 122 are not included in deduplication table 114 due to one or more factors, such as whether the data chunk is referenced by a tree data structure that was generated after a particular date, a recency of when the data chunk was last deduplicated, a frequency at which the data chunk is deduplicated, a service level agreement, a storage tier of a data chunk, etc.. In response to receiving the data structure, the client-side component is configured to use the data structure to identify the one or more data chunks of the portion of the received content that are to be sent via network connection 120 to be stored at cloud storage 122.

File system manager 115 may also provide an indication of one or more cloud storage element objects of cloud storage 122 to which a client-side component may write the one or more data chunks associated with the one or more chunk identifiers included in the data structure. In some embodiments, the indication includes a size of a batch of data chunks to create. In some embodiments, the indication of the one or more cloud storage element objects includes corresponding cloud storage element object identifiers. In some embodiments, the one or more cloud storage element objects include one or more new cloud storage element objects, one or more existing cloud storage element objects, and/or one or more cloud storage element objects yet to be created. In some embodiments, file system manager 115 periodically (e.g., every hour) provides to the one or more client-side components 104 an indication of a set of one or more cloud storage element objects.

A client-side component may receive an encryption key from encryption key manager 119. Encryption key manager manages encryption keys for a plurality of storage tenants. The received encryption key is particular to the storage tenant. In some embodiments, the encryption key enables read for a cloud storage element object associated with the storage tenant at a credential level or write access for a new cloud storage element object associated with the storage tenant at a credential level. For example, some cloud storage element objects may each have a unique credential. In some embodiments, the encryption key enables read or write access for a cloud storage element object associated with the storage tenant at a prefix level. For example, a prefix may be a partial or full file path in the cloud storage. A prefix may be unique to a storage tenant. Some or all cloud storage element objects of a particular storage tenant may be stored in cloud storage and share a prefix. The encryption key may expire after a particular amount of time. Source system 103 may be hacked and having the encryption key expire after the particular amount of time may prevent a hacker from accessing any of the cloud storage element objects stored at cloud storage 122.

A client-side component may combine a plurality of the identified data chunks into one or more batches. A default size of a cloud storage element object may be specified. In some embodiments the default size of the cloud storage object is 8 MB. In some embodiments, a size of the cloud storage element object is 8 MB. Storing a batch of default size at cloud storage 122 is an efficient use of the cloud storage. In some embodiments, a size of a batch of data chunks is less than the default size of the cloud storage element object, but greater than or equal to a threshold size. This is a sub-optimal configuration of cloud storage 122 due to increased resource usage associated with future operations on the cloud storage element objects. In some embodiments, a size of a batch of data chunks is less than the default size of the cloud storage element object and less than the threshold size.

In some embodiments, a default range size of a cloud storage element object is specified (e.g., 4 MB - 12 MB). In some embodiments, the size of a batch of data chunks is within the default size range of a cloud storage element object. In some embodiments, the size of a batch of data chunks is not within the default size range of a cloud storage element object.

Prior to writing a batch of data chunks to a cloud storage element object of cloud storage 122, a client-side component may compare a batch size of a batch to a threshold size (e.g., 4 MB). Additional overheads may be incurred by storing at cloud storage 122 cloud storage element objects that have a size that is less than the threshold size. Such cloud storage element objects may require additional application programming interface (API) calls to access the cloud storage element objects, which may add to the overall time and resources needed to perform a data management function (e.g., garbage collection, deduplication, replication, backup, etc.).

In the event the batch size of a batch is greater than or equal to the threshold size, the client-side component may encrypt the data chunks included in the batch with the received encryption key and write the encrypted data chunks to one of the cloud storage element objects identified by file system manager 115. In some embodiments, the data chunks are compressed prior to being encrypted. The client-side component may write the encrypted data chunks to a cloud storage element object associated with the first performance storage class 123, the second performance storage class 124, or the third performance storage class 125. The performance storage class to which the client-side component 104 writes the batch of data chunks may depend on a service level agreement associated with a storage tenant. In the event the batch size of the batch is not greater than or equal to the threshold size, the one or more client-side components 104 write one or more data chunks included in the batch to storage 116 of the one or more cloud servers 113. In some embodiments, the cloud storage element object associated with the cloud storage is a new cloud storage element object. In some embodiments, the cloud storage element object associated with the cloud storage is an existing cloud storage element object. In the event the cloud storage element object associated with the cloud storage is an existing cloud storage element object, the file system manager may read the data chunks associated with the existing cloud storage element object, combine the read data chunks with one or more new data chunks to generate a new version of the cloud storage element object, create an index for the new version of the cloud storage element object, and include the index in the new version of the cloud storage element object. In some embodiments, the index includes file offsets associated with the data chunks included in the cloud storage element object. In some embodiments, the index includes a pointer to a group of data chunks that were compressed and included in the cloud storage element object. The index may include an object id and a version number.

In the event the batch size of a batch is not greater than or equal to the threshold size, the client-side component may determine whether a batch period greater than or equal to a batch threshold period has passed. The client-side component may store in-memory the data chunk(s) included in the batch for the batch threshold period (e.g., <1 seconds) to allow additional data chunks to be included in the batch.

In the event the batch period is not greater than or equal to the batch threshold period, the client-side component processes a subsequent portion of the specified content to identify one or more data chunks of the subsequent portion of the specified content that are to be stored in the cloud storage. The one or more data chunks of the subsequent portion are combined with the one or more data chunks of the previous portion to generate a new batch of data chunks. The client-side component determines whether a size of the new batch of data chunks is greater than the threshold size. If it is, then the client-side component determines whether the batch period is greater than or equal to the batch threshold period. If it is not, then the above process repeats until the batch threshold period is greater than or equal to the batch threshold period.

In the event the batch period is greater than or equal to the batch threshold, the client-side component may provide one or more data chunks included in the batch to cloud server 113. In response to receiving the one or more data chunks, file system manager 115 may aggregate the one or more received data chunks with one or more other received data chunks. In some embodiments, the one or more received data chunks and the one or more other received data chunks are received from the same client-side component. In some embodiments, the one or more received data chunks and the one or more other received data chunks are received from a plurality of client-side components. In some embodiments, file system manager 115 determines whether a cumulative size of the aggregated data chunks is greater than the threshold size and less than a maximum size for a cloud storage object. In some embodiments, file system manger 115 determines whether a cumulative size of the aggregated data chunks is within a default size range. In the event the cumulative size of the aggregated data chunks is greater than the threshold size and less than the maximum size for the cloud storage object, or within the default size range, file system manager 115 may batch the aggregated data chunks, encrypt the batched data chunks using an encryption key associated with the storage tenant, and write the batched data chunks to a cloud storage element object associated with cloud storage 122 via connection 130. In some embodiments, connection 130 is a HTTPS connection or other type of connection. In some embodiments, the data chunks are compressed prior to being encrypted. File system manager 115 may write the encrypted data chunks to a cloud storage element object associated with the first performance storage class 123, the second performance storage class 124, or the third performance storage class 125. In the event the cumulative size of the aggregated data chunks is not greater than the threshold size, file system manager 115 may determine if the total time that the one or more received data chunks have been stored in storage 116 is greater than a threshold time. In the event the total time is greater than the threshold time, then file system manager 115 may batch the one or more received data chunks and one or more other received data chunks, if any, encrypt the batched data chunks using an encryption key associated with the storage tenant, and write the batched data chunks to a cloud storage element object associated with cloud storage 122.

In some embodiments, the cloud storage element object associated with the cloud storage is a new cloud storage element object. In some embodiments, the cloud storage element object associated with the cloud storage is a cloud storage element object yet to be created. In some embodiments, the cloud storage element object associated with the cloud storage is an existing cloud storage element object. In the event the cloud storage element object associated with the cloud storage is an existing cloud storage element object, the file system manager may read the data chunks associated with the existing cloud storage element object, combine the read data chunks with one or more new data chunks to generate a new version of the cloud storage element object, create an index for the new version of the cloud storage element object, and include the index in the new version of the cloud storage element object. The index may include an object id and a version number. In the event the total time is not greater than the threshold time, then file system manager 115 continues to aggregate a plurality of data chunks.

After the one or more client-side components 104 have written some or all of one or more batches of data chunks to one or more cloud storage element objects of cloud storage 122, the one or more client-side components 104 may be configured to provide file system manager 115 an indication that the one or more cloud storage element objects have been finalized (e.g., the one or more data chunks have been stored at a referenced portion of cloud storage 122). A cloud storage element object may be finalized when cloud storage 122 receives and stores all of the plurality of data chunks associated with the cloud storage element object. In response to receiving the indication, file system manager 115 is configured to generate metadata, i.e. file system metadata, for the one or more data chunks stored in cloud storage 122 by one of the one or more client-side components 104. The file system metadata for the one or more data chunks may include a tree data structure that organizes where the one or more data chunks are stored. An example of the tree data structure is a snapshot tree, which may be based on a B+ tree structure (or other type of tree structure in other embodiments). An example of a tree data structure is described in US patent application 16/287,214 entitled "Deploying A Cloud Instance Of A User Virtual Machine," filed on February 27, 2019, which is incorporated herein by reference for all purposes.

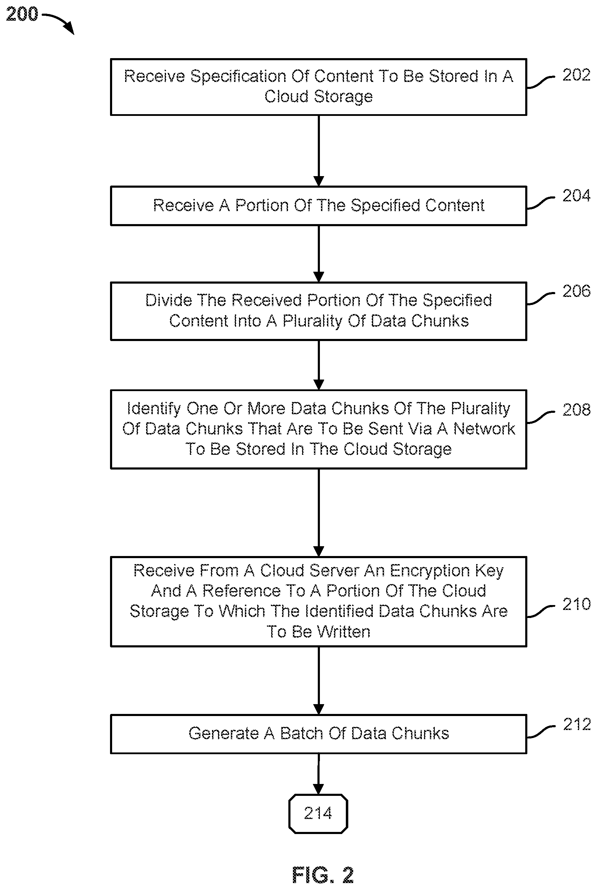

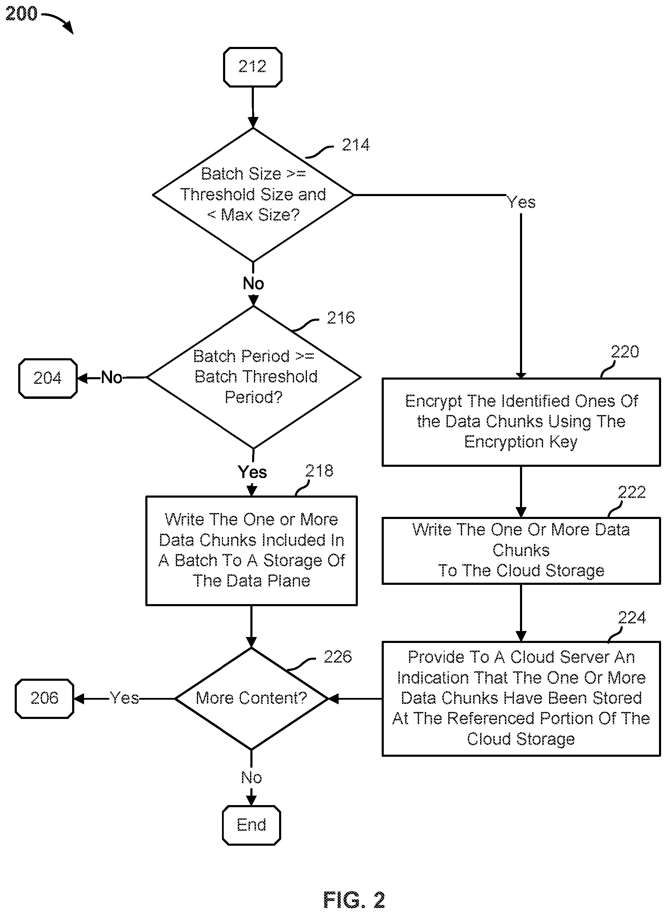

FIG. 2 is a flow diagram illustrating a process for backing up data to a cloud storage in accordance with some embodiments. In the example shown, process 200 may be implemented by a client-side component, such as one of the one or more client-side components 104.

At 202, a specification of content to be stored in a cloud storage is received. The specification may be received from a backup engine. In some embodiments, the backup engine is part of a data plane that is located in a cloud environment provided by a cloud service provider. In some embodiments, the specification is received from a source system.

In some embodiments, the specification of content describes a full backup of a source system. In some embodiments, the specification of content describes an incremental backup of a source system. In some embodiments, the specification of content describes a plurality of backups of a source system. In some embodiments, the specification of content describes a full backup of an object included in the source system (e.g., virtual machine, container, database, application). In some embodiments, the specification of content describes an incremental backup of an object included in a source system. In some embodiments, the specification of content describes a storage tier for one or more objects stored on source system 103. For example, a backup of a file stored on source system 103 may be tiered to the first performance storage class 123, the second performance storage class 124, or the third performance storage class 125.

At 204, a portion of the specified content is received at a client-side component from a source system. For example, 8 MB of a 1 TB backup may be received. Multiple portions of the specified content are received at the client-side component from the source system until a data management operation (e.g., backup, tiering, replication) is completed. The portion of the specified content may include source system metadata associated one or more objects stored on the source system (e.g., owner, created, last update, size, permissions, etc.) and/or data content associated with the one or more objects stored on the source system.

At 206, the data content in the received portion of the specified content is divided into a plurality of data chunks. In some embodiments, the plurality of data chunks may be of variable size. In some embodiments, the source system metadata may also be divided into a plurality of data chunks, although in FIG. 2, the source system metadata is not divided into data chunks.

At 208, one or more data chunks of the plurality of data chunks to be sent via a network to be stored in the cloud storage are identified. A corresponding chunk identifier is computed for each of the one or more data chunks. Data chunk metadata that includes the one or more corresponding chunk identifiers, corresponding data chunk size, and corresponding object offsets is sent to a file system manager. The data chunk metadata indicates a sequence of data chunks within an object. For example, the data chunk metadata may indicate that a first data chunk having a chunk identifier of C1 is associated with an object offset of 0 MB - 1 MB and has a data chunk size of 1 MB, a second data chunk having a chunk identifier of C2 is associated with an object offset of 1 MB - 2 MB and has a data chunk of 1 MB, ..., and an 8th data chunk identifier of C8 is associated with an object offset of 7 MB - 8 MB and has a data chunk size of 1 MB. In response to receiving the one or more corresponding chunk identifiers, the file system manager may determine whether any of the one or more corresponding chunk identifiers are included in a deduplication table by comparing each of the corresponding chunk identifiers to chunk identifiers included in a deduplication table. In some embodiments, the one or more chunk identifiers not included in the deduplication table correspond to data chunks that are not stored at a cloud storage. In some embodiments, the one or more chunk identifiers not included in the deduplication table correspond to one or more data chunks that are stored at the cloud storage; however, data chunks which are stored at the cloud storage may not be included in the deduplication table due to one or more factors, such as whether the data chunk is referenced by a tree data structure that was generated after a particular date, a recency of when the data chunk was last deduplicated, a frequency at which the data chunk is deduplicated, a service level agreement, a storage tier of a data chunk, etc. The file system manager may identify which of the one or more corresponding chunk identifiers correspond to data chunks that are not included in the deduplication table stored at the cloud storage and provide to a client-side component a data structure that includes the identified one or more corresponding chunk identifiers.

At 210, an encryption key and a reference to a portion of a cloud storage where one or more data chunks are to be stored are received from a cloud server. The encryption key is particular to a storage tenant. The encryption key may expire after a particular amount of time. In some embodiments, the encryption key enables read access for a cloud storage element object associated with the storage tenant at a credential level or write access for a new cloud storage element object associated with the storage tenant at a credential level. For example, some cloud storage element objects may each have a unique credential. In some embodiments, the encryption key enables read or write access for a cloud storage element object associated with the storage tenant at a prefix level. For example, a prefix may be a partial or full file path in the cloud storage. A prefix may be unique to a storage tenant. Some or all cloud storage element objects of a particular storage tenant may be stored in cloud storage and share a prefix.

The reference to a portion of the cloud storage may identify one or more cloud storage element objects of the cloud storage to which one or more data chunks are to be stored. For example, the reference to the portion of the cloud storage may include corresponding identifiers for a set of one or more cloud storage element objects. In some embodiments, the set of one or more cloud storage element objects include one or more new cloud storage element objects, one or more existing cloud storage element objects, and/or one or more cloud storage element objects yet to be created. In some embodiments, a reference may comprise a cloud storage element object name which is to be used to create a new cloud storage element object. In some embodiments, the reference to one or more cloud storage element objects is periodically received from the data plane. In some embodiments, the one or more cloud storage element objects included in the reference are available to be written for a threshold period of time (e.g., 1 hour).

The one or more identified cloud storage element objects may be stored in first performance storage class of a cloud storage, a second performance storage class of the cloud storage, or a third performance storage class of the cloud storage.

At 212, a batch of data chunks is generated. The data chunks included in the batch correspond to the one or more data chunks identified by the file system manager of the cloud server.

At 214, it is determined whether a batch size of the generated batch is greater than or equal to a threshold size and less than a maximum size for a cloud storage element object. The size of the generated batch varies based on the number of data chunks included in the received portion of specified content that are already stored in cloud storage.

In the event the generated batch size is greater than or equal to the threshold size (e.g., 4 MB) and less than a maximum size for a cloud storage element object, process 200 proceeds to step 220. In the event the batch size of a batch is not greater than or equal to the threshold size, process 200 proceeds to 216. In the event the generated batch size is greater than the maximum size for a cloud storage element object, the generated batch is split into two or more batches where each batch is greater than or equal to the threshold size and less than the maximum size for a cloud storage element object. In such a scenario, process 200 proceeds to 220 for each of the batches.

In some embodiments, at 214, it is determined whether the generated batch size is within a default size range for a cloud storage element object (e.g., 4 MB - 12 MB). In the event the size of the generated batch is within the default size range, process 200 proceeds to 220. In the event the generated batch size is not within the default size range, process 200 proceeds to 216.

At 216, it is determined whether a batch period is greater than or equal to a batch threshold period. For a generated batch that is less than a threshold size, data chunks included in the generated batch may be stored in memory for a batch threshold period (e.g., <1 second) to allow additional data chunks to be included in the batch. Storing a batch of data chunks that is less than the threshold size in a cloud storage element object at cloud storage may cause the recovery process of an object associated with the cloud storage element object to be slow because additional reads need to be performed when restoring the object associated with the cloud storage element object.

In the event the batch period is greater than or equal to the batch threshold period, process 200 proceeds to 218. In the event the batch period is not greater than or equal to the batch threshold period, process 200 returns to 204 where the client-side component processes a subsequent portion of the specified content to identify one or more data chunks of the subsequent portion of the specified content that are to be stored in the cloud storage. The one or more data chunks of the subsequent portion are combined with the one or more data chunks of the previous portion to generate a new batch of data chunks. The client-side component determines whether a size of the new batch of data chunks is greater than the threshold size. If it is, then process 200 proceeds to step 220. If it is not, then process 200 proceeds to step 216 and the above process repeats until the batch threshold period is greater than or equal to the batch threshold period.

At 218, the one or more data chunks included in a batch and an index of the one or more data chunks included in the batch are written to a storage of a cloud server included in the data plane. The one or more data chunks may be provided to cloud server of the data plane via an encrypted channel, such as a gRPC connection. In some embodiments, the one or more data chunks are encrypted.

At 220, the data chunks included in the batch are encrypted using the encryption key received at 210. In some embodiments, the data chunks are compressed prior to being encrypted. At 222, the encrypted data chunks are written to referenced portion of the cloud storage identified at 210. In some embodiments, a cloud storage element object is generated with the one or more data chunks and written to the cloud storage identified at 210. A cloud storage may be selected among a plurality of different cloud storage destinations associated with different performance storage classes. The selected cloud storage may be based on a service level agreement associated with a storage tenant.

At 224, an indication that the one or more identified data chunks are stored at the referenced portion of the cloud storage is provided to a cloud server. The referenced portion of the cloud storage may include one or more existing cloud storage element objects and/or one or more new cloud storage element objects. This may comprise data chunk metadata. A cloud server hosting a file system manager in the data plane, such as cloud server 113, may receive the indication. The indication may include the corresponding chunk identifiers for the one or more data chunks that were sent at step 208 as well as cloud storage locations for the one or more data chunks that were written to cloud storage at step 222. In response to receiving the indication, the file system manager is configured to generate file system metadata (e.g., tree data structure, chunk metadata data structure, cloud storage element object metadata data structure) that enables the one or more data chunks that were written to cloud storage to be located and provides a view (partial or complete) of the source system at a particular moment in time.

At 226, it is determined whether any additional portions of the specified content have been received at the client-side component. In the event any additional portions of the specified content have been received at the client-side component, process 200 returns to step 206. In the event any additional portions of the specified content have not been received at the client-side component, process 200 ends.

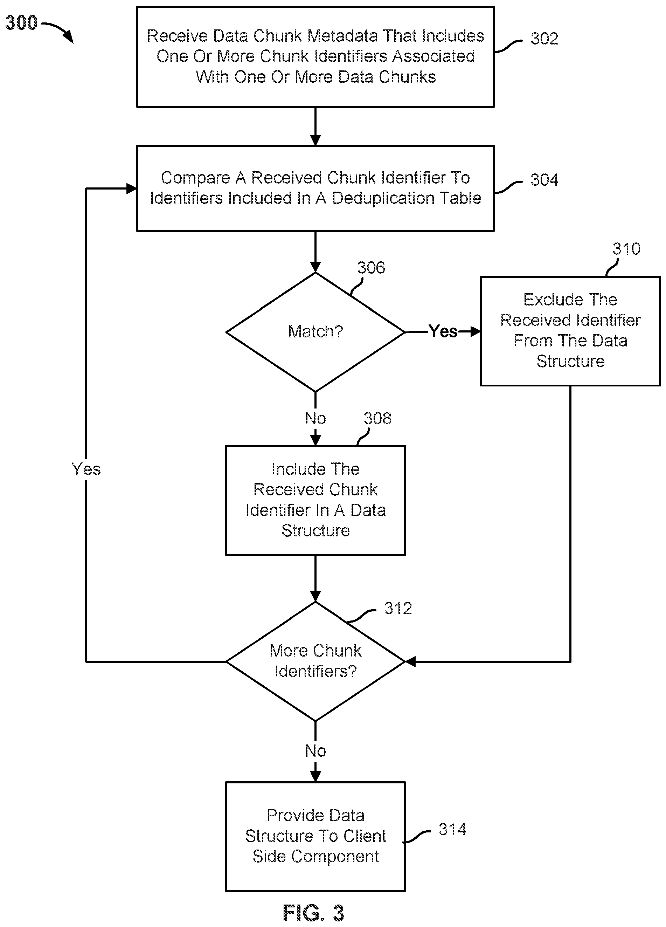

FIG. 3 is a flow diagram illustrating a process for determining which data chunks to provide to a cloud storage in accordance with some embodiments. In the example shown, process 300 may be implemented by a file system manager, such as file system manager 115.

At 302, data chunk metadata that includes one or more chunk identifiers associated with one or more data chunks are received. A chunk identifier may be a unique identifier, such as a SHA-1 identifier. The one or more chunk identifiers may be associated with a particular amount of data (e.g., 4 MB of data). The data chunk metadata may include other information, such as data chunk size and object offset for a data chunk. The data chunk metadata indicates a sequence of data chunks within an object.

At 304, a received chunk identifier is compared to identifiers included in a deduplication table. The deduplication table may associate data chunks with their corresponding chunk identifiers. The deduplication table may identify some or all of the data chunks that are stored in a cloud storage. In some embodiments, the one or more chunk identifiers not included in the deduplication table correspond to data chunks that are not stored at a cloud storage. In some embodiments, the one or more chunk identifiers not included in the deduplication table correspond to one or more data chunks that are stored at the cloud storage, but the one or more chunk identifiers associated with the one or more data chunks that are stored at cloud storage are not included in deduplication table due to one or more factors, such as whether the data chunk is referenced by a tree data structure that was generated after a particular date, a recency of when the data chunk was last deduplicated, a frequency at which the data chunk is deduplicated, a service level agreement, a storage tier of a data chunk, etc.

The cloud storage may be associated with a plurality of performance storage classes. The deduplication table may indicate in which performance storage class of the cloud storage that a data chunk is stored. In some embodiments, the deduplication table only identifies the data chunks that are stored in a top performance storage class of the cloud storage. In some embodiments, the deduplication table identifies the data chunks that are stored in the cloud storage based on a service level agreement associated with a storage tenant. For example, the service level agreement associated with a storage tenant may allow the storage tenant to store data chunks in a first performance storage class and a second performance storage class. The deduplication table may identify the data chunks that are stored in the first performance storage class of the cloud storage and the second performance storage class of the cloud storage.

At 306, it is determined whether there is a match between the received chunk identifier and one of the chunk identifiers included in the deduplication table. In the event there is a match between the received chunk identifier and one of the chunk identifiers included in the deduplication table, process 300 proceeds to 310. In the event there is not a match between the received chunk identifier and one of the chunk identifiers included in the deduplication table, process 300 proceeds to 308.

At 308, the received chunk identifier is included in a data structure. In some embodiments, the data structure indicates one or more chunk identifiers associated with one or more data chunks that are not stored at a cloud storage. In some embodiments, the data structure indicates one or more chunk identifiers associated with one or more data chunks that are stored at the cloud storage, but the one or more data chunks that are stored at the cloud storage are excluded from the deduplication table due to one or more factors, such as whether the data chunk is referenced by a tree data structure that was generated after a particular date, a recency of when the data chunk was last deduplicated, a frequency at which the data chunk is deduplicated, a service level agreement, a storage tier of a data chunk, etc.

At 310, the received chunk identifier is excluded from the data structure (e.g., list, table, etc.).

At 312, it is determined whether there are any more chunk identifiers to compare to chunk identifiers included in the deduplication table. In the event there are more chunk identifiers to compare to chunk identifiers included in the deduplication table, process 300 returns to 304. In the event there are no more chunk identifiers to compare to chunk identifiers included in the deduplication table, process 300 proceeds to 314.

At 314, a data structure that includes one or more chunk identifiers is provided to a client-side component. The data structure may be provided to a client-side component at step 208 of process 200.

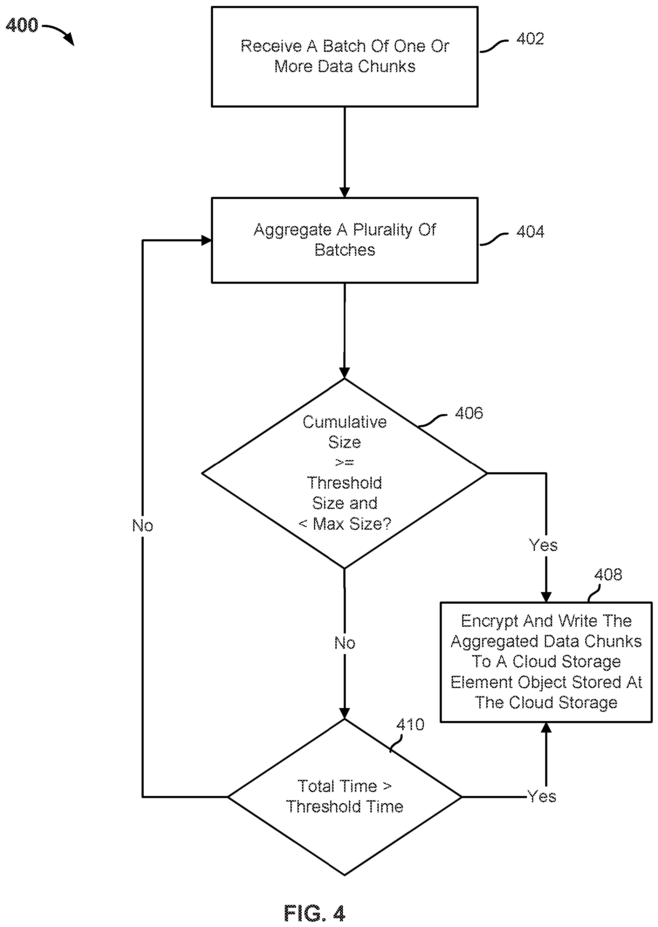

FIG. 4 is a flow diagram illustrating a process for writing data chunks to cloud storage in accordance with some embodiments. In the example shown, process 400 may be performed by one or more cloud servers, such as the one or more cloud servers 113.

At 402, a batch of one or more data chunks is received. A client-side component may have generated a batch of one or more data chunks, but determined that a batch size of the generated batch is less than a threshold size.

At 404, a plurality of data chunks from a plurality of batches are aggregated. The batch of one or more data chunks received at 402 may be aggregated with one or more other batches of data chunks. In some embodiments, the one or more other batches of data chunks are received from the same client-side component that provided the batch of one or more data chunks received at 402. In some embodiments, the one or more other batches of data chunks are received from a different client-side component associated with a tenant. The different client-side component may be located at the same datacenter (e.g., a second client-side component at 104) or located at a different datacenter (e.g., a client-side component located at a datacenter different from datacenter 102).

At 406, it is determined whether the cumulative size of the aggregated data chunks is greater than a threshold size and less than a maximum size for a cloud storage element object. In the event the cumulative size of the aggregated data chunks is greater than or equal to a threshold size and less than the maximum size, process 400 proceeds to 408. In the event the cumulative size of the aggregated data chunks is not greater than or equal a cloud storage element size threshold, process 400 proceeds to 410.

At 408, the aggregated data chunks are encrypted, the encrypted data chunks are written to a cloud storage element object and stored at the cloud storage. In some embodiments, the data chunks are compressed prior to being encrypted.

At 410, it is determined whether a total time since receiving the batch of one or more data chunks at 402 is greater than a threshold time (e.g., 2 hours). In the event the total time since receiving the one or more data chunks at 402 is greater than the threshold time, process 400 proceeds to 408 where the aggregated data chunks are encrypted and written to a cloud storage element object stored at the cloud storage even though the cumulative size of the aggregated data chunks is less than the threshold size. In some embodiments, the data chunks are compressed prior to being encrypted.

In some embodiments, the cloud storage element object associated with the cloud storage is a new cloud storage element object. In some embodiments, the cloud storage element object associated with the cloud storage is a cloud storage element object yet to be created. In some embodiments, the cloud storage element object associated with the cloud storage is an existing cloud storage element object. In the event the cloud storage element object associated with the cloud storage is an existing cloud storage element object, the file system manager may read the data chunks associated with the existing cloud storage element object, combine the read data chunks with one or more new data chunks to generate a new version of the cloud storage element object, create an index for the new version of the cloud storage element object, and include the index in the new version of the cloud storage element object. The index may include an object id and a version number.

A storage of a cloud server (e.g., EC2 instance) may be less reliable and/or more expensive than a cloud storage (e.g., S3). The one or more data chunks may be written to a cloud storage element object stored at the cloud storage to ensure that the one or more data chunks are not lost in the event the storage of the cloud server fails. In the event the total time since receiving the one or more data chunks at 402 is not greater than the threshold time, process 400 returns to 404.

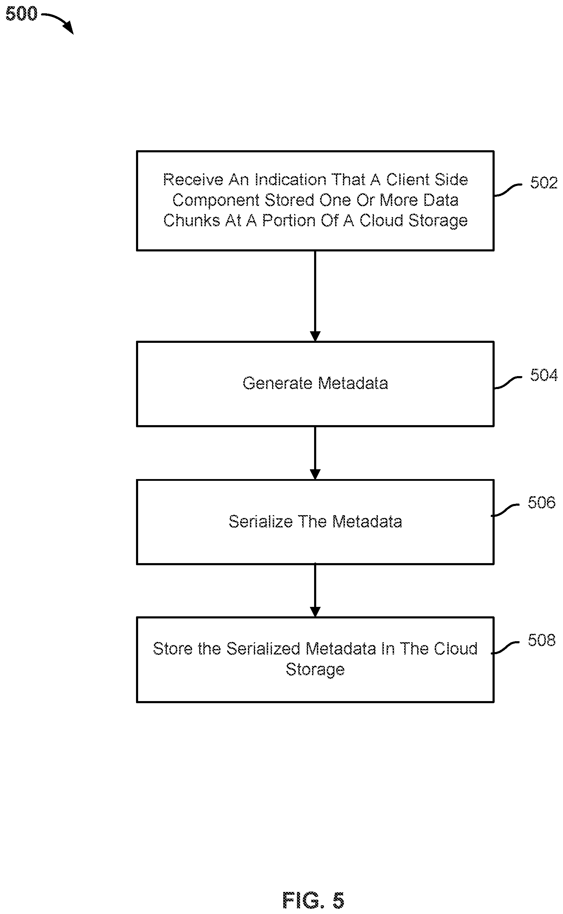

FIG. 5 is a flow diagram illustrating a process for generating metadata, such as file system metadata, in accordance with some embodiments. In the example shown, process 500 may be implemented by a cloud server, such as one of the one or more cloud servers 113.

At 502, an indication that a client-side component stored one or more data chunks at a portion of a cloud storage is received from a client-side component. The received indication may indicate the client-side component has finalized sending the one or more data chunks. The received indication may be the indication provided at step 224 of process 200 by a client-side component. The indication may include the corresponding chunk identifiers for the one or more data chunks that were sent from client-side component at step 208 as well as cloud storage locations for the one or more data chunks that were written to cloud storage at step 222.

At 504, file system metadata is generated for the one or more data chunks stored in the cloud storage by the client-side component. The one or more data chunks stored in the cloud storage correspond to the content of a source system at a particular moment in time. The one or more data chunks may be stored in one or more cloud storage element objects of the cloud storage. In response to receiving the indication, the file system manager of the cloud server is configured to generate file system metadata (e.g., tree data structure, chunk metadata data structure, cloud storage element object data structure) that enables the one or more data chunks that were written to cloud storage to be located and provides a view (partial or complete) of the source system at a particular moment in time.

File system metadata may be generated that enables a location in the cloud storage of the data chunks that correspond to an object of the source system at the particular moment in time to be determined. The file system metadata may include one or more tree data structures that keep track of the data chunks stored in the one or more cloud storage element objects. An example of the tree data structure is a snapshot tree, which may be based on a B+ tree structure (or other type of tree structure in other embodiments). An example of a tree data structure is described in US patent application 16/287,214 entitled "Deploying A Cloud Instance Of A User Virtual Machine," filed on February 27, 2019.

A snapshot tree includes a root node, one or more levels of one or more intermediate nodes associated with the root node, and one or more leaf nodes associated with an intermediate node of the lowest intermediate level. The root node of a snapshot tree includes one or more pointers to one or more intermediate nodes. Each intermediate node includes one or more pointers to other nodes (e.g., a lower intermediate node or a leaf node). A leaf node may store source system metadata (e.g., owner, created, last update, size, permissions, etc.), data associated with a content file that is less than or equal to a limit size (e.g., 256 kB), an identifier of a data brick, one or more pointers to one or more metadata structures (e.g., Blob structure), etc. A leaf node of the snapshot tree may correspond to an inode.

A metadata structure may be generated for an object (e.g., a content file, a virtual machine, a container, an application, a database, etc.) that is greater than the limit size (e.g., 256 kB) and was included in the source system content that was backed up to the cloud storage. The metadata structure is configured to store the metadata associated with an object that enables the data chunks associated with the object to be located, i.e. the data chunk metadata and/or the file system metadata. The metadata structure includes a root node, one or more levels of one or more intermediate nodes associated with the root node, and one or more leaf nodes associated with an intermediate node of the lowest intermediate level. A metadata structure is similar to a snapshot tree, but a leaf node of a metadata structure includes an identifier of a data brick associated with one or more data chunks of the content file and metadata associated with the one or more data chunks (e.g., chunk identifier, cloud storage element object identifier, etc. - the data chunk metadata). A leaf node of the snapshot tree may include a pointer to a root node of the metadata structure corresponding to an object.

The location of the one or more data chunks associated with a data brick may be identified using one or more data structures (e.g., list, table, etc.). A first data structure (e.g., chunk metadata data structure) may store information that associates a plurality of chunk identifiers with their corresponding cloud storage element object identifiers. This indicates that a data chunk having a particular chunk identifier is stored in a cloud storage element object having a particular cloud storage element object identifier. In some embodiments, the chunk metadata data structure is deduplication table 114. A second data structure (e.g., cloud storage element object metadata data structure) may associate a cloud storage element object identifier associated with a cloud storage element object with one or more data chunks stored in the cloud storage element object. The second data structure may also indicate a corresponding cloud storage element object offset for each of the one or more data chunks stored in the cloud storage element object. In some embodiments, the first data structure and the second data structure are combined as a single data structure. The one or more tree data structures, the first data structure, and the second data structure may be stored in metadata store 117, which may be stored in a memory of cloud server 113.

The one or more data chunks associated with a data brick may be located based on the chunk metadata data structure (e.g., a table) and the chunk storage element object metadata data structure. For example, a first data brick having a first brick identifier may be associated with a first chunk identifier (e.g., SHA-1 hash value). The first chunk identifier may be used in conjunction with the chunk metadata data structure to identify a cloud storage element object identifier. A cloud storage element object having the identified cloud storage element object identifier is comprised of a plurality of data chunks. The cloud storage element object metadata data structure may be used to identify a corresponding location of the plurality of data chunks. The cloud storage element object metadata data structure may include corresponding offset information of the plurality of data chunks within a cloud storage element object.

At 506, the file system metadata for the one or more data chunks is serialized into a data file comprising a flat set of data. The flat set of data includes a plurality of data blocks where each data block of the flat set of data corresponds to a node of the tree data structure. A block that corresponds to a root node or intermediate node of the tree data structure includes a file offset to another data block of a flat set of data. A data block that corresponds to a leaf node includes a reference to a storage location for one or more data chunks with which the leaf node is associated. An example of a serialized data file is described in US patent application 15/689,704 entitled "Snapshot Archive Management," filed on August 29, 2017, which is incorporated herein by reference for all purposes. The file system metadata may be stored in a metadata store, such as metadata store 117.

At 508, the serialized file system metadata is stored in the cloud storage. A storage of a cloud server (e.g., EC2 instance) that stores the file system metadata may be less reliable and/or more expensive than the cloud storage (e.g., S3). The metadata for the one or more data chunks may be serialized and stored at the cloud storage to ensure that the file system metadata for the one or more data chunks is not lost in the event the storage of the cloud server fails.

Steps 506 and 508 may be periodically (e.g., daily, weekly, bi-monthly, monthly, etc.) performed by a cloud server. In some embodiments, steps 506 and 508 are performed after a particular amount of time has passed after a backup has completed.

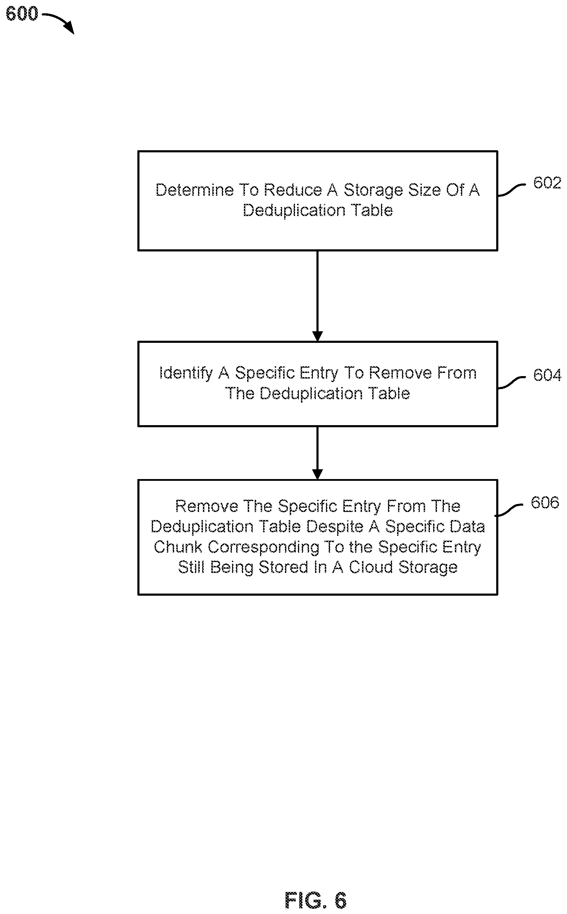

FIG. 6 is a flow diagram illustrating a process for managing a deduplication table in accordance with some embodiments. In the example shown, process 600 may be implemented by a file system manager, such as file system manager 115. The deduplication table may be stored in a solid-state drive (SSD) of a cloud server. The amount of storage space in the SSD is finite. A size of the deduplication table may grow as an amount of data stored by a storage tenant at a cloud storage increases. The deduplication table may be managed in a manner described by process 600 to prevent the deduplication table from using an unnecessary amount of the SSD storage because the deduplication table includes references to data chunks that do not need to be deduplicated for one or more different reasons. Process 600 may be performed for each of the chunk identifiers included in a deduplication table. In some embodiments, process 600 is performed as a background process.

At 602, it is determined to reduce a storage size of a deduplication table. In some embodiments, the storage size of a deduplication table has exceeded a threshold max size. In some embodiments, a storage size of the deduplication table is periodically scanned (e.g., daily, weekly, monthly, etc.) to reduce the storage size of the deduplication table. A deduplication table includes a plurality of entries. Each of the entries associates a corresponding chunk identifier to a specific data chunk stored at a cloud storage.

At 604, a specific entry is identified to be removed from the deduplication table. The specific entry may be identified based on one or more properties of the specific entry or a specific data chunk corresponding to the specific entry. For example, a specific entry may not have been accessed within a threshold period of time. The specific data chunk corresponding to the specific entry may be identified based on whether the data chunk is referenced by a tree data structure that was generated after a particular date, a recency of when the data chunk was last deduplicated, a frequency at which the data chunk is deduplicated, etc.

In some embodiments, for the specific entry to be removed from the deduplication table, it is determined whether the data chunk corresponding to the specific entry should be demoted to a lower performance storage class. A cloud storage may include a plurality of performance storage classes. The speed at which data may be accessed at the cloud storage may depend on the performance storage class with which the data chunk is associated. In some embodiments, data chunks that are associated with a top performance storage class are to be deduplicated and include corresponding entries in the deduplication table. In some embodiments, data chunks that are not associated with the top performance storage class are not to be deduplicated and not include corresponding entries in the deduplication table.

A deduplicated data chunk may be determined to be demoted from the top performance storage class to a lower performance storage class based on one or more factors. For example, the one or more factors may include based on whether the data chunk is referenced by a tree data structure that was generated after a particular date, a recency of when the data chunk was last deduplicated, a frequency at which the data chunk is deduplicated, a service level agreement, a storage tier of a data chunk, etc.

In some embodiments, the one or more factors indicate that the data chunk should remain in its current performance storage class. In some embodiments, the one or more factors indicate that the data chunk should be demoted to a lower performance storage class. In some embodiments, the one or more factors indicate that the data chunk should be upgraded to a higher performance storage class.

In the event it is determined that the data chunk should be demoted to a lower performance storage class, the file system manager determines whether one or more objects that reference the specific data chunk are associated with a performance storage class that is lower than a current performance storage class associated with the specific data chunk. For example, the current performance storage class associated with the specific data chunk may be performance storage class 123 and the performance storage class associated with the one or more objects that reference the specific data chunk may be performance storage class 124 or performance storage class 125. In the event it is determined that the deduplicated data chunk should not be demoted to a lower performance storage class, the deduplication table is maintained in its current state. In the event it is determined that the deduplicated data chunk should be demoted to a lower performance storage class, the performance storage class for the data chunk is modified to the lower performance storage class and the entry corresponding to the data chunk is removed from the deduplication table.

At 606, the specific entry is removed from the deduplication table despite the specific data chunk corresponding to the specific entry still being stored in the cloud storage. This may reduce the amount of storage used by the deduplication table in a SSD of a cloud server.

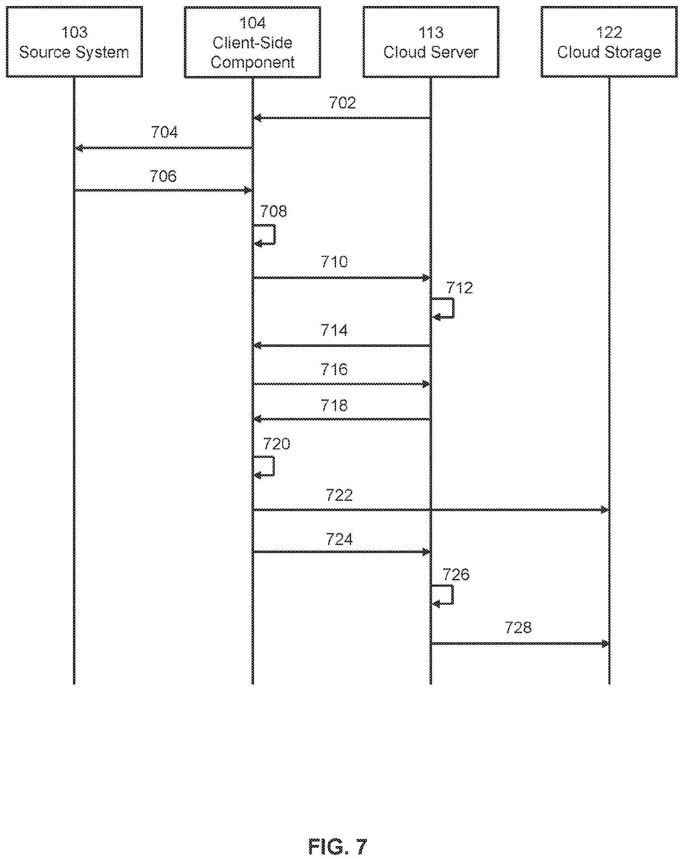

FIG. 7 is a timing diagram that illustrates how data is exchanged between the source system 103, the client-side component 104, the cloud server 113, and the cloud storage 122 to enable data to be stored at the cloud storage 122 in one example. FIG. 7 may be considered to correspond to the processes of FIG. 2 to FIG. 4. Although different reference numerals are used, like steps will be identified below.

Initially, a specification of content is received at the client-side component 104 from the cloud server 113, at step 702. This step 702 corresponds to step 202 of FIG. 2. In response, the client-side component 104 obtains the content identified in the specification from the source system 103, as indicated by steps 704 and 706. These steps correspond to step 204 of FIG. 2. Step 704 may comprise the client-side component 104 requesting the content from the source system 103 and step 706 may comprise the client-side component 104 receiving the content in return from the source system 103. In some examples, steps 704 and 706 may comprise the client-side component 104 reading the content directly from the source system 103 via, e.g., an API or by other means. In some examples, the client-side component may operate to request the content at step 704 without receiving the specification of content at step 702. In other examples, the source system may instead push data to be backed up to the client-side component 104, meaning that neither of step 702 and 704 are performed in these examples.

At step 708, the client-side component 104 divides the content received from the source system 103 into a plurality of chunks. This corresponds to step 206 in FIG. 2.

Steps 710 to 714 correspond to step 208 of the process of FIG. 2, which is the identification of one or more data chunks to be stored in the cloud storage. As described above in relation to step 208, this may involve determining chunks already stored at cloud storage to avoid sending these chunks again. Accordingly, at step 710, the client-side component 104 sends a plurality of chunk identifiers, which may be determined using a hashing algorithm so that each chunk has a unique identifier, to the cloud server 113. At step 712, the cloud server consults a deduplication table 114 to determine whether each chunk is already stored at the cloud storage 122 or if it is missing. At step 714, a data structure indicating the 'missing' data chunks, i.e. the data chunks that are not stored at the cloud storage 122, is returned to the client-side component 104. This is described in FIG. 3.

The chunk identifiers are sent to the cloud server 113 rather than being compared to a local table because the client-side component 104 may not store data relating to what is stored at the cloud storage 122 to preserve storage space at the datacenter. Furthermore, the client-side component 104 may be one of a plurality of client-side components 104 belonging to the storage tenant or otherwise associated with the particular cloud server 113. Accordingly, the cloud server 113 may be configured to receive data chunks from a plurality of different client-side components 104. The cloud server 113 therefore operates as a centralized processor for checking chunk identifiers, to avoid duplication of data chunks that may be stored in more than one source system 103. Sending chunk identifiers, rather than chunks, reduces the amount of data transferred across the network.

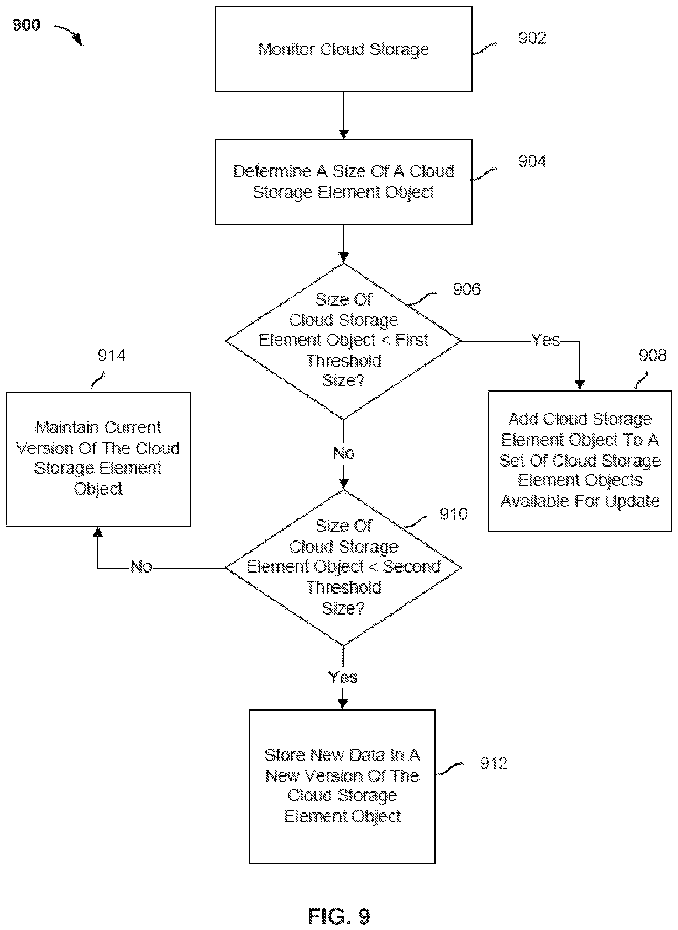

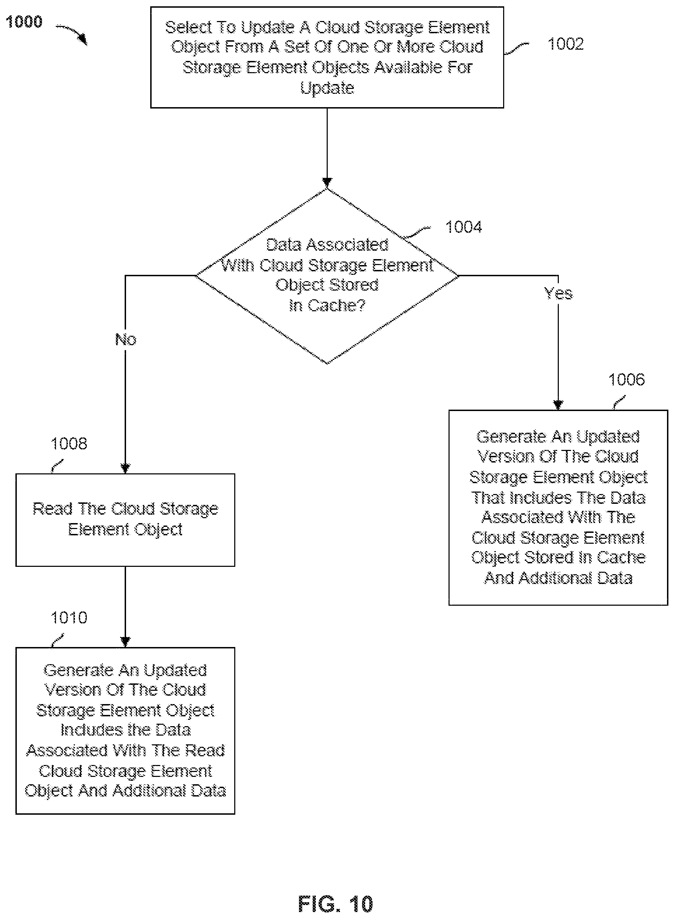

If it is determined that there are missing chunks, a new cloud storage element object may be required. Alternatively, an existing cloud storage element object may be updated to include the missing chunks, as is described in relation to FIG. 9 and FIG. 10. At step 716, the client-side component 104 may request one or more cloud storage element objects from the cloud server 113 for storage of the data chunks that were identified at step 712. At step 718, the cloud server 113 may return an identity of the cloud storage element object in which the data chunks are to be stored. The cloud storage element object may have an associated object identifier and/or may be identified by its location within the cloud storage 122. This step corresponds to step 210 of FIG. 2, and may therefore also include sending the encryption key as described above.

In some embodiments, instead of step 716 in which the client-side component 104 requests cloud storage element objects, the cloud server 113 may provide a list of cloud storage element object identifiers corresponding to cloud storage element objects to which batches may be uploaded to the client-side component. The cloud server 113 may send cloud storage element object identifiers to the client-side component as it identifies them to be added to the list. The client-side component 104 may retain the list of cloud storage element object identifiers in a buffer.

At step 720, the client-side component 104 performs the batching process described in steps 212 to 216 of FIG. 2. At step 722, the client-side component 104 sends batches having the default size or being within the default size range to the cloud storage 122. At step 724, the client-side component 104 sends batches that are less than the threshold size and for whom the batch threshold period has expired to the cloud server 113. Steps 722 and 724 correspond to steps 218 to 222 of FIG. 2. At step 726, the cloud server 113 performs its aggregation process as described in relation to FIG. 4, and at step 728 sends the aggregated batch to the cloud storage 122 or sends a batch for which the threshold time has elapsed to the cloud storage 122.

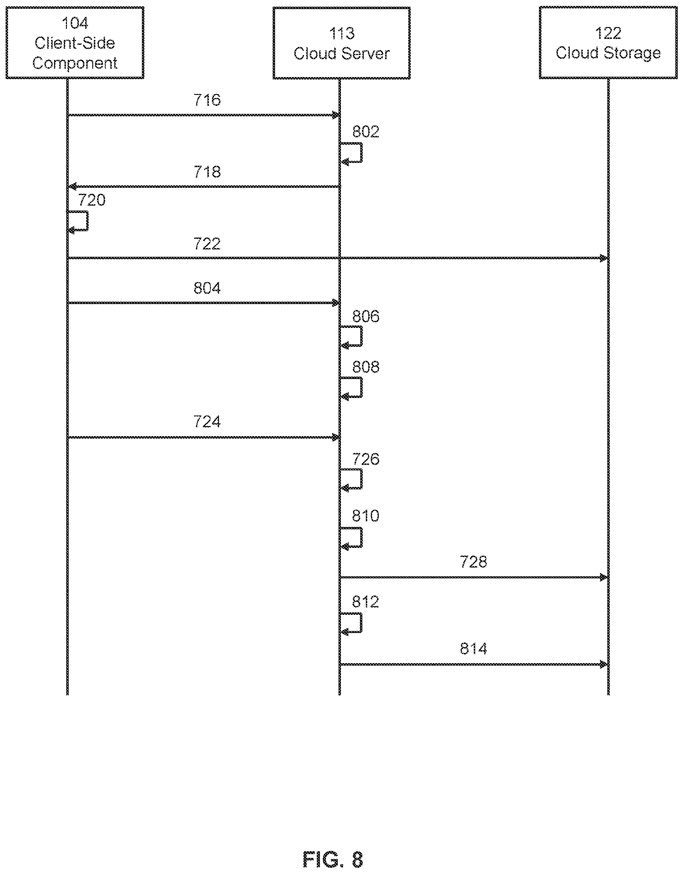

FIG. 8 is a timing diagram that illustrates how data and metadata are exchanged between the client-side component 104, the cloud server 113, and the cloud storage 122. Some features shown in FIG. 8 may also have been described above in relation to FIG. 5. For context, some steps described in relation to FIG. 7 are incorporated into FIG. 8, and may be identified by the reference numerals used in relation to FIG. 7.

FIG. 8 initially shows step 716, at which the client-side component 104 makes a request for a cloud storage element object. In FIG. 7 it is described that the cloud server 113 responds by identifying a cloud storage element object to the client-side component, at step 718. The cloud server 113 may identify the cloud storage element object using an object identifier. Prior to step 718, the cloud server 113 may perform step 802, in which an entry associated with the cloud storage element object identified by the cloud server 113 may be created in a table, such as the deduplication table pr a table corresponding to cloud storage element objects, of the cloud server 113. In the entry the cloud server 113 may set a field associated with the cloud storage element object to indicate that the cloud storage element object is to be updated with new data chunks. This field may also be set at the cloud server 113 when updating existing cloud storage element objects. Setting such a field may cause garbage collection operations to ignore the object.

The cloud storage element object identified by the cloud server 113 may be a new cloud storage element object that does not yet have data chunks stored therein, or may be an existing cloud storage element object that is smaller than the default or threshold size due to garbage collection or deduplication. Where the cloud storage element object is an existing cloud storage element object, the cloud server 113 may also send an indication to the client-side component 104 that the cloud storage element object already exists.

The cloud server 113 may also identify a URL for accessing a resource, such as an API or webpage, via which data chunks may be uploaded to the cloud storage element object. Additionally, the cloud server may identify an expiry time of the URL and/or of the resource, after which the URL and/or resource may no longer be used. A URL may be provided to access a resource for uploading to existing cloud storage element objects or for uploading to new cloud storage element objects. The resource may have a restriction that data stored in cloud element storage objects may not be obtained through it, meaning that anyone who happens to have the URL and did not receive it from the data plane cannot determine what is stored in the cloud storage element object.

In FIG. 8, steps 720 and 722 are performed as described in relation to FIG. 7. In step 722, if the cloud storage element object is an existing cloud storage element object, the client-side component may read the data chunks already stored in the cloud storage element object and append new chunks to the existing chunks. In some embodiments, rather than reading the data chunks of an existing cloud storage element object, the client-side component 104 may send a request to the cloud server 113 to create a new version of the cloud storage element object. In return, the client-side component 104 may receive a URL corresponding to a resource for uploading the batch to the new version, and may upload the batch to the new version without reading the data chunks already stored. In these embodiments, the data chunks of the uploaded batch are appended to the data chunks already stored.

Having stored one or more batches at cloud storage 122 in step 722, the client-side component 104 sends an indication to the cloud server 113 that one or more data chunks were stored in cloud storage 122 at step 804. This may correspond to step 502 of FIG. 5.

In step 804, the client-side component 104 provides to the cloud server 113 an identity of the chunks that were stored in the cloud storage 122 and the cloud storage element object in which they were stored. To perform step 804, the client-side component 104 may send a plurality of chunk identifiers to the cloud server 113. The plurality of chunk identifiers may include chunk identifiers of data chunks that have just been stored in the cloud storage 122 and chunk identifiers of data chunks that were already stored at cloud storage. In other words, the plurality of chunk identifiers send in step 804 may be the same plurality of chunk identifiers sent to the cloud server 113 at step 710 for comparison with the deduplication table. However, in step 710, the chunk identifiers did not include a corresponding identifier for a cloud storage element object, whereas in step 804, a corresponding identifier cloud storage element object may be sent along with the chunk identifiers of data chunks stored in the cloud storage 122 at step 722 to allow the cloud server 113 to update the deduplication table. Sending all chunk identifiers in step 804, rather than just the chunk identifiers that were stored in cloud storage 122 at step 722, allows the same API to be used. It may also allow the cloud server 113 to check which data chunks are yet to be written, i.e. which chunks have yet to be included in a batch of the correct size. The chunk identifiers may be sent by the client-side component in a sequence in which they are received from the source system. The cloud server 113 may update a data structure based on the sequence of the chunk identifiers. For example, leaf nodes of a snapshot tree may be ordered in the sequence of chunk identifiers. The sequence of data chunks is also useful when restoring an object because the sequence indicates how the data chunks may be used to restore the object.

In response, at step 806, the cloud server 113 may update the deduplication table, by indicating the identity of the chunks that were stored in the cloud storage 122. The deduplication table may also be updated to associate the chunk identifiers with the cloud storage element objects. Subsequently, when the process of FIG. 7 is performed, the updated deduplication table may ensure that the chunks that have since been provided to the cloud storage 122 are not duplicated. The deduplication table may also store timestamps associated with each chunk.

At step 808, the cloud server 113 may generate file system metadata relating to the cloud storage element object, as described above in relation to step 504. This file system metadata may be generated by updating a data structure, such as a tree data structure, associated with an object such as a content file. The data structure may specify the structure of the object. The data structure may also specify a sequence of data chunks, which is used for restoring the object. The data structure may indicate where in the cloud storage 122 the data chunks for the object are found, if they are already stored at the cloud storage 122.

As noted above, the client-side component 104 may also send batches that do not meet a batch threshold size to the cloud server 113 at step 724. Although step 724 is depicted as taking place after step 804, it will be appreciated that in some examples, step 724 may be performed at the same time as step 804 or before step 804.

After receiving the batch, the cloud server 113 may aggregate one or more batches as described above at 726. If, upon receiving a batch, the cloud server 113 can aggregate it to create an aggregated batch having a size that is greater than the batch threshold size, then the cloud server 113 may send the aggregated batch to the cloud storage 122 at step 728 without creating a local file in the cloud server storage for the received batch. However, if at step 726 a batch having the batch threshold size is not created, then at step 810 the cloud server 113 may create a local file in the cloud server storage for the batch. Creating a local file allows the batch to be identified in the data structure stored at the cloud server 113. Whether the batch is immediately aggregated and sent to the cloud storage 122 or a local file is created at the cloud server 113, the data structure relating to the object is updated to indicate a new location of the batched chunks. This may comprise a cloud storage element object stored at the cloud storage 122 or a local temporary file location for the batch in the cloud server storage 116.

After the threshold time or when new data chunks are received, the cloud server 113 will be able to perform step 728, and will send the batch of data chunks to the cloud storage 122. At step 812, a part of the data structure relating to the batch sent at step 728 may be updated. The deduplication table may also be updated to indicate the locations of chunks in the cloud storage 122.

At step 814, the cloud server 113 may send the generated file system metadata to the cloud storage 122 for storage, as described in relation to steps 506 and 508 of FIG. 5. The file system metadata, comprising, for example, a data structure comprising metadata relating to the chunk data, data bricks comprising the chunk data, and other chunk file metadata, may be sent to the cloud storage 122. The file system metadata may be sent to cloud storage 122 once the size of the file system metadata is at the default size or at least greater than the batch threshold size, or once the threshold time has elapsed. In other words, file system metadata is stored in the same way at cloud storage 122 as the data itself is stored by the cloud server 113, by batching and storing in a cloud storage element object having a specific size or range of sizes, or based on a total time relative to a threshold time. Accordingly, even when storing file system metadata via the cloud server 113, storage space is used efficiently. This means that reading file system metadata from the cloud storage 122 is also more efficient in future operations.

The backup is considered complete once the data chunks and the file system metadata are stored at the cloud storage 122. The cloud server 113 may retain a version of the data structure to allow the data structure to be updated during later backups and for fast access should it be required.

In order to restore one or more objects, the data structure relating to the object may be accessed at the cloud server 113. The data structure may be traversed to identify data stored in, e.g. leaf nodes of the data structure. The data of the leaf nodes may identify a cloud storage element object in which the data chunks needed to restore the object have been archived. The data chunks may be identified based on a range or an offset value corresponding to the files to be restored because such data may be stored in the data structure. The cloud server 113 may determine the cloud storage element objects and provide to the client-side component 104 a list of the cloud storage element objects and the chunk identifiers therein. The cloud server 113 may provide access credentials to the client-side component to enable the client-side component to access the data stored within the cloud storage element objects that it provides in the list. The credentials may be associated with an expiry time, meaning that the cloud storage element objects can only be accessed for a predetermined period of time by the client-side component. The client-side component 104 may then read the data chunks from the cloud storage element objects directly from the cloud storage 122. This means that only metadata is transferred between the cloud server 113 and the client-side component 104, and that the data is routed directly from its archived location in the cloud storage 122 to the client-side component 104. This, too, is an efficient use of data storage, ensuring that the amount of data transferred is minimized, while enabling a fast and efficient restore.

If the data chunks required for the restoration are spread across multiple cloud storage element objects, i.e. the data is fragmented, then the restoration may take some time, during which the expiry time associated with the access credentials may pass. An API may be provided to enable a client-side component to request new access credentials from the cloud server 133.

In order to access the data chunks read from the cloud storage element object(s), the client-side component may have to decrypt the data chunks. Once decrypted, the data chunks can be written to the source system.

FIG. 9 is a flow diagram illustrating a process for updating a cloud storage element object in accordance with some embodiments. In the example shown, process 900 may be implemented by a cloud server, such as one of the one or more cloud servers 113.

At 902, a cloud storage is monitored. The cloud storage is configured to store a plurality of cloud storage object elements.

At 904, a current size of a cloud storage element object is determined. For example, the current size of a cloud storage element object may be 0.5 MB when the default size of the cloud storage object element is 8 MB. In some embodiments, the cloud storage element object has a current size that is less than the default size of a cloud storage object element or smaller than the default size range of a cloud storage object element. In some embodiments, an initial size of the cloud storage element object, i.e. the size of the cloud storage object element when it was first stored, may have been the default size of a cloud storage object element or within the default size range of a cloud storage object element. Due to deduplication, garbage collection, or other operations that may affect what is stored in a cloud storage object element, the current size of the cloud storage object element may be smaller than the initial size. Accordingly, while the initial size may have been the default size or within the default size range, the current size of the cloud storage element object is less than the default size of a cloud storage object element or smaller than the default size range of a cloud storage object element.

At 906, it is determined whether the size of the cloud storage element object is less than a first threshold size. For example, the first threshold size may be 1 MB. In the event it is determined that the size of the cloud storage element object is less than the first threshold size, process 900 proceeds to 908. In the event it is determined that the size of the cloud storage element object is not less than the first threshold size, process 900 proceeds to 910.

At 908, the cloud storage element object is added to a set of one or more cloud storage element objects available for update. An identifier of the cloud storage element object may be included in a set of one or more cloud storage element object identifiers received by a client-side component at 210. In other words, when the client-side component requests a cloud storage element object in which to store data chunks, e.g. at step 716, the cloud server 113 may provide, in response, an identifier of a cloud storage element object in the set of cloud storage element objects that are available for update. Additionally, or alternatively, a client-side component may select the added cloud storage element object from the set of one or more cloud storage element objects and update the selected cloud storage element object with an updated version.

The updated version may include previously existing data of the cloud storage element object and additional data. The previously existing data and the additional data may be encrypted using an encryption key associated with a storage tenant.

In some embodiments, the updated version of the cloud storage element object associated with the cloud storage is a new cloud storage element object. For example, the cloud storage element object may be created by the client-side component.

In some embodiments, the updated version of the cloud storage element object associated with the cloud storage is an existing cloud storage element object. In the event the updated version of the cloud storage element object associated with the cloud storage is an existing cloud storage element object, the file system manager may read the data chunks associated with the existing cloud storage element object, combine the read data chunks with one or more new data chunks to generate a new version of the cloud storage element object, create an index for the new version of the cloud storage element object, and include the index in the new version of the cloud storage element object. The index may include an object id and a version number.

Utilizing a process by which objects are selected by a client-side component, the objects may be updated when new chunks are available to increase the size of object, ensuring that data is transferred when the update is to be performed. The process by which the update process is performed is described below in relation to FIG. 10. At 910, it is determined whether the size of the cloud storage element object is less than a second threshold size. For example, the second threshold size may be 4 MB. In the event the size of the cloud storage element object is less than a second threshold size, process 900 proceeds to 912. In the event the size of the cloud storage element object is not less than the second threshold size, process 900 proceeds to 914.

At 912, new data chunks are stored in a new version of the cloud storage element object. A new version of the cloud storage element object retains the object identifier associated with the cloud storage element object, so that file system metadata relating to the cloud storage element object only needs to be updated to reflect any new chunks stored therein. In some embodiments, the new data chunks are received from a client-side component. The cloud storage element object is updated to an updated version that includes previously existing data of the cloud storage element object and the new data received from the client-side component. The previously existing data and the new data received from the client-side component may be encrypted using an encryption key associated with a storage tenant and written to a new version of the cloud storage element object.

In some embodiments, the new data chunks are received from a cloud server. The cloud storage element object is updated to an updated version that includes previously existing data of the cloud storage element object and the new data chunks received from the cloud server. The previously existing data and the new data chunks received from the cloud server may be encrypted using an encryption key associated with a storage tenant and written to a new version of the cloud storage element object.

In some embodiments, the previous version of the cloud storage element object is deleted.

In contrast to step 908, new data chunks stored in the new version of the cloud storage element object in step 912 may be received from the cloud server, rather than from the client-side component. The process of receiving new data chunks enables data chunks that have been directed to the data plane to be aggregated with other data chunks to form a cloud storage element object of the default size.

In step 908 and thereafter, cloud storage element objects whose size is below the first threshold are updated based on new data chunks from the client-side component rather than the cloud server, as in step 912, because the client-side component receives larger batches of data chunks from the source system than the cloud server receives from the client-side component. Accordingly, the client-side component may receive an identifier of an existing cloud storage element and may update the existing cloud storage element object to be closer to the default size more quickly than the cloud server. Furthermore, it is desirable to keep data chunks received at the client-side component from the source system together as far as possible, so updating small cloud storage element objects with larger batches of data chunks from a client-side component is more efficient than updating small cloud storage element objects with larger aggregated batches which may contain data chunks that are unrelated to one another as would be received from the cloud server. On the other hand, it is more efficient to update objects with sizes between the first and second threshold sizes from the cloud server because the cloud server may be able to provide small sizes of or small groups of data chunks to increase the size of the cloud storage element object to above the threshold size more quickly, thereby allowing a backup to be completed.

At 914, a current version of the cloud storage element object is maintained.

By implementing a split process for updating cloud storage element objects based on their size relative to specific thresholds, updates may be applied to cloud storage element objects efficiently. Additionally, the updating process may make use of the roles of the client-side component in batching and the data plane in aggregating batches together, by treating objects whose sizes are less than specific thresholds as the chunks or batches found in FIG. 2 and FIG. 4.

FIG. 10 is a flow diagram illustrating a process for updating a cloud storage element object in accordance with some embodiments. In the example shown, process 1000 may be implemented by a client-side component, such as one of the one or more client-side components 104. In some embodiments, process 1000 is implemented to perform some of step 214 of process 200.

At 1002, a cloud storage element object is selected for update from a set of one or more cloud storage element objects available for update. The set of one or more cloud storage element objects available for update may be received from a file system manager of a cloud server.

At 1004, it is determined whether data associated with the cloud storage element object is stored in a cache of the client-side component. In the event data associated with the cloud storage element object is stored in a cache of the client-side component, process 1000 proceeds to 1006. In the event data associated with the cloud storage element object is not stored in the cache of the client-side component, process 1000 proceeds to 1008.

The cloud storage element object, or at least the data chunks therein, may be stored in the cache of the client-side component if a batch corresponding to the cloud storage element object was generated by the client-side component, had a size that was less than the threshold size, and was therefore sent to the data plane for aggregation. In other words, the client-side component may be configured to cache batches whose batch size is less than the threshold size. For example, at step 218, as well as writing the one or more data chunks to the storage of the data plane, the client-side component may also be configured to store the one or more data chunks included in the batch to a local cache. Storing data chunks in a cache in this way enables fast recall of the data chunks for update later, if the cloud storage element object associated with the batch is selected for update by the processes of FIG. 9 and FIG. 10.

At 1006, an updated version of the cloud storage element object that includes the data associated with the cloud storage element object stored in the cache and additional data is generated. The data associated with the cloud storage element object and the additional data may be encrypted using the encryption key provided at 210. An index for the new version of the cloud storage element object may be generated and included in the new version of the cloud storage element object. The index may include an object id and a version number.

At 1008, the cloud storage element object is read from the cloud storage. The client-side component may temporarily store the read data in a cache of the client-side component.

At 1010, an updated version of the cloud storage element object that includes the data associated with the read cloud storage element object and additional data is generated. The data associated with the cloud storage element object and the additional data may be encrypted using the encryption key provided at 210. An index for the new version of the cloud storage element object may be generated and included in the new version of the cloud storage element object. The index may include an object id and a version number.

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Although the foregoing embodiments have been described in some detail for purposes of clarity of understanding, the invention is not limited to the details provided. There are many alternative ways of implementing the invention. The disclosed embodiments are illustrative and not restrictive.

Aspects of the present invention are provided with reference to the following clauses:
Clause 1: a method, comprising: receiving at a client-side component, a specification of content to be stored in a cloud storage; dividing a portion of the content into a plurality of data chunks; identifying one or more data chunks of the plurality of data chunks that are to be sent via a network to be stored in the cloud storage; determining whether a batch size of the one or more identified data chunks meets a threshold size; and based on the determination of whether the batch size meets the threshold size, selecting a cloud storage destination among a plurality of different cloud storage destinations associated with different performance tiers.
Clause 2: the method of clause 1, further comprising receiving the portion of the content from a source system.
Clause 3: the method of clause 1, wherein identifying one or more data chunks of the plurality of data chunks that are to be sent via the network to be stored in the cloud storage includes: computing one or more corresponding chunk identifiers for each of the data chunks; sending the one or more corresponding chunk identifiers to a file system manager, wherein the file system manager compares the one or more corresponding chunk identifiers to chunk identifiers included in a deduplication table; and receiving from the file system manager an indication of one or more chunk identifiers that are not included in the deduplication table.
Clause 4: the method of clause 1, further comprising receiving an encryption key.
Clause 5: the method of clause 1, further comprising receiving a reference to a portion of the cloud storage to which the one or more identified data chunks are to be written.
Clause 6: the method of clause 1, wherein in the event the batch size meets the threshold size, encrypting the one or more identified data chunks and writing the one or more identified data chunks to the cloud storage.
Clause 7: the method of clause 6, further comprising providing to a cloud server an indication that the one or more identified data chunks have been stored at a referenced portion of the cloud storage.
Clause 8: the method of clause 7, wherein in response to receiving the indication, the cloud server generates metadata for the one or more identified data chunks that have been stored at the referenced portion of the cloud storage.
Clause 9: the method of clause 1, wherein in the event the batch size does not meet the threshold size, determining whether a batch period is equal to or greater than a batch threshold period.
Clause 10: the method of clause 9, further comprising: determining that the batch period is not equal to or greater than a batch threshold period; receiving a subsequent portion of the content from a source system; and dividing the received subsequent portion into a second plurality of data chunks.
Clause 11: the method of clause 10, further comprising identifying one or more data chunks of the second plurality of data chunks that are to be sent via the network to be stored in the cloud storage.
Clause 12: the method of clause 11, further comprising generating a batch of data chunks that includes the one or more identified data chunks of the plurality of data chunks and the one or more identified data chunks of the second plurality of data chunks.
Clause 13: the method of clause 12, further comprising determining whether the batch size of the batch of data chunks meets a threshold size.
Clause 14: the method of clause 13, further comprising in response to determining that the batch size of the batch of data chunks meets the threshold size, encrypting the batch of data chunks and writing the batch of data chunks to the selected cloud storage destination at the cloud storage.
Clause 15: the method of clause 9, further comprising: determining that the batch period is equal to or greater than a batch threshold period; and writing the one or more identified data chunks to a storage of a data plane.
Clause 16: the method of clause 15, wherein a file system manager of the data plane aggregates the one or more identified data chunks and one or more other batches of data chunks.
Clause 17: the method of clause 16, wherein the file system manager of the data plane writes the aggregated data chunks to a cloud storage element object located at the cloud storage based on whether a cumulative size of the aggregated data chunks is greater than or equal to a threshold size.
Clause 18: the method of clause 1, wherein identifying one or more data chunks of the plurality of data chunks that are to be sent via the network to be stored in the cloud storage includes providing metadata associated with the plurality of data chunks to a cloud server.
Clause 19: a computer program product embodied in a non-transitory computer readable medium and comprising computer instructions for: receiving at a client-side component, a specification of content to be stored in a cloud storage; dividing a portion of the content into a plurality of data chunks; identifying one or more data chunks of the plurality of data chunks that are to be sent via a network to be stored in the cloud storage; determining whether a batch size of the one or more identified data chunks meets a threshold size; and based on the determination of whether the batch size meets the threshold size, selecting a cloud storage destination among a plurality of different cloud storage destinations associated with different performance tiers.
Clause 20: a system, comprising: one or more processors configured to: receive a specification of content to be stored in a cloud storage; dividing a portion of the content into a plurality of data chunks; identify one or more data chunks of the plurality of data chunks that are to be sent via a network to be stored in the cloud storage; determine whether a batch size of the one or more identified data chunks meets a threshold size; and based on the determination of whether the batch size meets the threshold size, select a cloud storage destination among a plurality of different cloud storage destinations associated with different performance tiers; and a memory coupled to the one or more processors and configured to provide the one or more processor with instructions.
Clause 21: a method, comprising: determining at a cloud server component that a size of a first cloud storage element object is at least below a first threshold; in response to a first determination, requesting a client-side component to store additional data in the cloud storage element object including by having the client-side component update the first cloud storage element with an updated version that includes previously existing data of the first cloud storage element and the additional data; and adding the first cloud storage element object to a set of one or more cloud storage element objects available for update, wherein the client-side component generates an updated version of the first cloud storage element object that has a size that is greater than or equal to the first threshold.
Clause 22: the method of clause 21, further comprising monitoring a cloud storage storing the first cloud storage element object.
Clause 23: the method of clause 21, wherein an initial size of the first cloud storage element object was above the first threshold and a current size of the first cloud storage element object is below the first threshold.
Clause 24: the method of clause 21, wherein an initial size and a current size of the first cloud storage element object are below the first threshold.
Clause 25: the method of clause 21, wherein an identifier associated with the first cloud storage element object is included in the set of one or more cloud storage element objects available for update.
Clause 26: the method of clause 21, wherein the client-side component selects the first cloud storage element object from a set of one or more cloud storage element objects available for update.
Clause 27: the method of clause 26, wherein the client-side component determines whether the previously existing data of the first cloud storage element is stored in a cache storage of the client-side component.
Clause 28: the method of clause 27, wherein in response to determining that the previously existing data of the first cloud storage element is stored in the cache storage of the client-side component, the client-side component uses the previously existing data of the first cloud storage element stored in the cache storage of the client-side component and additional data to generate the updated version of the first cloud storage element.
Clause 29: the method of clause 28, wherein the previously existing data of the first cloud storage element and the additional data are encrypted using an encryption key received from the cloud server.
Clause 30: the method of clause 28, wherein the updated version of the first cloud storage element is associated with a corresponding identifier and corresponding version number.
Clause 31: the method of clause 27, wherein in response to determining that the previously existing data of the first cloud storage element is not stored in the cache storage of the client-side component, the client-side component reads the first cloud storage element, and uses the read data of the first cloud storage element and additional data to generate the updated version of the first cloud storage element.
Clause 32: the method of clause 31, wherein the read data of the first cloud storage element and the additional data are encrypted using an encryption key received from the cloud server.
Clause 33: the method of clause 32, wherein the updated version of the first cloud storage element is associated with a corresponding identifier and corresponding version number.
Clause 34: the method of clause 31, further comprising: determining that a size of a second cloud storage element object is above the first threshold but below a second threshold; and in response to a second determination, storing new data chunks in the second cloud storage element object including by updating the second cloud storage element object with an updated version that includes previously existing data of the second cloud storage element object and the received new data chunks.
Clause 35: the method of clause 34, wherein the client-side component encrypts the previously existing data of the second cloud storage element object and the new data chunks using an encryption key associated with a storage tenant.
Clause 36: a computer program product embodied in a non-transitory computer readable medium and comprising computer instructions for: determining at a cloud server component that a size of a first cloud storage element object is at least below a first threshold; in response to a first determination, requesting a client-side component to store additional data in the cloud storage element object including by having the client-side component update the first cloud storage element with an updated version that includes previously existing data of the first cloud storage element and the additional data; and adding the first cloud storage element object to a set of one or more cloud storage element objects available for update, wherein the client-side component generates an updated version of the first cloud storage element object that has a size that is greater than or equal to the first threshold.
Clause 37: the computer program product of clause 36, further comprising computer instructions for monitoring a cloud storage storing the first cloud storage element object.
Clause 38: the computer program product of clause 36, wherein an initial size of the first cloud storage element object was above the first threshold and a current size of the first cloud storage element object is below the first threshold.
Clause 39: the computer program product of clause 36, wherein an initial size and a current size of the first cloud storage element object are below the first threshold.
Clause 40: a system, comprising: a processor configured to: determine at a cloud server component that a size of a first cloud storage element object is at least below a first threshold; in response to a first determination, request a client-side component to store additional data in the cloud storage element object including by having the client-side component update the first cloud storage element with an updated version that includes previously existing data of the first cloud storage element and the additional data; and add the first cloud storage element object to a set of one or more cloud storage element objects available for update, wherein the client-side component is configured to generate an updated version of the first cloud storage element object that has a size that is greater than or equal to the first threshold; and a memory coupled to the processor and configured to provide the processor with instructions.
Clause 41. A method for backing up data to remote storage, the method comprising: generating, by a client-side component, one or more batches of data chunks; causing, by the client-side component, the one or more batches of data chunks to be stored in one or more storage objects of the remote storage, wherein batches having a size that is less than a threshold size are transmitted from the client-side component to the remote storage via a remote computing system that is separate from the remote storage, such that: batches having a size that is greater than or equal to the threshold size are transmitted directly from the client-side component to the remote storage for storage in at least one first storage object of the one or more storage objects, and batches having a size that is less than the threshold size are transmitted to the remote storage, for storage in at least one second storage object of the one or more storage objects, via the remote computing system; and transmitting, from the client-side component to the remote computing system, an indication of said at least one first storage object, wherein the remote computing system is configured to update a tree data structure to refer to said at least one first storage object based on the indication and to refer to said at least one second storage object, and to store the updated tree data structure at the remote storage.
Clause 42. The method of clause 41, comprising: receiving, by the client-side component, data from a source system; and dividing, by the client-side component, the data into a plurality of data chunks, wherein the one or more batches are generated from the plurality of data chunks.
Clause 43. The method of clause 42, comprising identifying, by the client-side component, one or more data chunks from the plurality of data chunks that are to be stored in the remote storage, wherein the one or more batches are generated from the one or more data chunks.
Clause 44. The method of clause 43, wherein identifying the one or more data chunks from the plurality of data chunks that are to be stored in the remote storage includes: computing, by the client-side component, corresponding chunk identifiers for each of the plurality of data chunks; sending, by the client-side component, the corresponding chunk identifiers to the remote computing system, wherein the remote computing system compares the corresponding chunk identifiers to chunk identifiers included in a deduplication table; and receiving, by the client-side component, from the remote computing system an indication of one or more chunk identifiers that are not included in the deduplication table, the one or more chunk identifiers corresponding to the one or more data chunks from the plurality of data chunks that are to be stored in the remote storage.
Clause 45. The method of any one of clauses 42 to 44, comprising: comparing, by the client-side component, the one or more batches to the threshold size; for batches whose size is greater than or equal to the threshold size, transmitting the batches directly to the remote storage; and for batches whose size is less than the threshold size, prior to causing the one or more batches to be stored in the remote storage: determining, by the client-side component, whether a period of time since receiving the data from the source system is greater than or equal to a threshold period; and transmitting, from the client-side component to the remote computing system, the batches whose size is less than the threshold size if the period of time is greater than or equal to the threshold period or increasing, by the client-side component, the size of the batches based on further data received from the source system if the period of time is not greater than or equal to the threshold period.
Clause 46. The method of clause 45, wherein increasing, by the client-side component, the size of the batches comprises: receiving, by the client-side component, further data from the source system; dividing, by the client-side component, the further data into a second plurality of data chunks; identifying, by the client-side component, one or more data chunks of the second plurality of data chunks that are to be stored in the remote storage; and generating, by the client-side component, an updated batch of data chunks that includes the one or more identified data chunks of the second plurality of data chunks and the data chunks whose size is less than the threshold size and for which the period of time is not greater than or equal to the threshold time.
Clause 47. The method of clause 46, comprising: comparing, by the client-side component, the updated batch of data chunks to the threshold size; and transmitting the updated batch directly to the remote storage if the size of the updated batch is greater than or equal to the threshold size.
Clause 48. The method of any one of clauses 41-47, further comprising: receiving, by the client-side component, an encryption key; and encrypting, by the client-side component, the batches having a size that is greater than or equal to a threshold size using the encryption key prior to transmitting the batches to the remote storage.
Clause 49. The method of any one of clauses 41-48, further comprising: receiving, by the client-side component from the remote computing system, at least one storage object identifier corresponding to said at least one first storage object; transmitting, by the client-side component, the batches having a size that is greater than or equal to a threshold size to the remote storage for storage in said at least one first storage object corresponding to the at least one storage object identifier.
Clause 50. The method of clause 49, wherein said at least one first storage object comprises an existing storage object stored in the remote storage, and wherein the method further comprises: reading, by the client-side component, said at least one first storage object to determine data chunks already stored therein; and transmitting, by the client-side component, the batches for storage in said at least one first storage object in addition to the data chunks already stored in said at least one first storage object.
Clause 51. The method of clause 49 or clause 50, comprising: receiving, by the client-side component from the remote computing system, a URL that provides access to a resource by which batches may be transmitted directly to said at least one first storage object and an expiry time associated with the URL and/or the resource after which batches may not be transmitted directly to said at least one first storage object using the URL and/or the resource, and wherein the resource enables data to be uploaded to said at least one first storage object and prevents data being accessed from said at least one first storage object.
Clause 52. The method of any one of clauses 41-51, further comprising providing to the remote computing system, by the client-side component, an indication that the batches having a size that is greater than or equal to a threshold size have been stored at said at least one first storage object, and, in response to receiving the indication: generating, by the remote computing system, metadata for the data chunks of the one or more batches stored at said at least one first storage object; and updating, by the remote computing system, the tree data structure based on the metadata.
Clause 53. The method of any one of clauses 41-52, further comprising: receiving, by the remote computing system, a batch having a size that is less than the threshold size from the client-side component; determining, by the remote computing system, based on the batch and one or more further batches previously received by the remote computing system, that an aggregated batch having a size that is greater than or equal to the threshold size may be formed from the batch and the one or more further batches; and generating, by the remote computing system, the aggregated batch based on the batch and the one or more further batches; transmitting, by the remote computing system, the aggregated batch directly to the remote storage for storage in said at least one second storage object; and updating, by the remote computing system, the tree data structure to refer to said at least one second storage object.
Clause 54. The method of clause 53, wherein the aggregated batch is generated and transmitted directly to the remote storage without storing the received batch in a local storage of the remote computing system.
Clause 55. The method of any one of clauses 41 to 52, further comprising: receiving, by the remote computing system, a batch having a size that is less than the threshold size that are transmitted to the remote computing system; determining, by the remote computing system, that an aggregated batch having a size that is greater than or equal to the threshold size cannot be currently formed at the remote computing system; storing, by the remote computing system, the received batch in a local storage of the remote computing system; and updating, by the remote computing system the tree data structure to refer to a location of the received batch in the local storage.
Clause 56. The method of clause 55, further comprising: receiving, by the remote computing system, one or more further batches having a size that is less than the threshold size; determining, by the remote computing system, based on the batch and the one or more further batches, that an aggregated batch having a size that is greater than or equal to the threshold size may be formed from the batch and the one or more further batches; and generating, by the remote computing system the aggregated batch based on the batch and the one or more further batches; transmitting, by the remote computing system, the aggregated batch directly to the remote storage for storage in said at least one second storage object; and updating, by the remote computing system, the tree data structure to refer to said at least one second storage object.
Clause 57. The method of any one of clauses 41-56, wherein the remote computing system stores the tree data structure in at least one third storage object in the remote storage, and wherein the remote computing system stores the tree data structure in said at least one third storage object in response to determining that at least the tree data structure has a size that is greater than or equal to the threshold size or in response to determining that a threshold time has elapsed since the tree structure was updated.
Clause 58. The method of any one of clauses 41-57, the method comprising: receiving, by the client-side component, a request to restore a source system based on data stored in the remote storage; requesting, from the client-side component to the remote computing system, restoration of the data stored in the remote storage; receiving, by the client-side component from the remote computing system, one or more storage object identifiers corresponding to said at least one first storage object and said at least one second storage object and one or more chunk identifiers corresponding to the data chunks stored in the first and second storage objects; and reading, by the client-side component from the remote storage, the data chunks stored in the first and second storage objects based on the received one or more storage object identifiers and the one or more chunk identifiers; and restoring, at the source system by the client-side component, the data based on the data chunks read from the remote storage.
Clause 59. A system comprising: a remote storage; a remote computing system that is separate to the remote storage; and a client-side component that is separate to the remote storage and the remote computing system, the client-side component having at least one processor and memory, and wherein the memory comprises instructions which, when executed by the at least one processor, cause the at least one processor to carry out the method of any one of clauses 41-58.
Clause 60. A computer program product embodied in a non-transitory computer readable medium and comprising computer instructions which, when executed by a computer system, cause the computer system to carry out the method of any one of clauses 41-58.

## Claims

1. A method (600) for managing a deduplication table, the method comprising:
determining (602) to reduce a storage size of a deduplication table, wherein the deduplication table includes a plurality of entries, each entry associating a corresponding chunk identifier to a specific data chunk stored at a cloud storage;
identifying (604) a specific entry to be removed from the deduplication table, wherein identifying the specific entry to be removed comprises determining that a current performance storage class associated with the specific data chunk should be modified to a lower performance storage class;
modifying the current performance storage class for the specific data chunk to be the lower performance storage class; and
removing (606) the specific entry from the deduplication table while continuing to store the specific data chunk corresponding to the specific entry in the cloud storage.

2. The method of claim 1, wherein determining to reduce the storage size of the deduplication table comprises determining that the storage size of the deduplication table has exceeded a threshold max size or periodically scanning the storage size of the deduplication table.

3. The method of claim 1 or claim 2, wherein the specific entry is identified based on whether the specific entry has not been accessed within a threshold period of time.

4. The method of any preceding claim, wherein the specific entry is identified based on whether the specific data chunk is referenced by a tree data structure that was generated after a particular date, a recency of when the specific data chunk was last deduplicated, or a frequency at which the specific data chunk is deduplicated.

5. The method of any preceding claim, wherein determining that the current performance storage class associated with the specific data chunk should be modified to the lower performance storage class comprises determining that one or more objects that reference the specific data chunk are associated with a performance storage class that is lower than the current performance storage class associated with the specific data chunk.

6. The method of any preceding claim, wherein the deduplication table is stored in a solid-state drive of a cloud server.

7. The method of any preceding claim, wherein the deduplication table is a first data structure that associates a plurality of chunk identifiers with corresponding cloud storage element object identifiers, and wherein a second data structure associates the corresponding cloud storage element object identifiers with the specific data chunk of each entry and indicates a corresponding cloud storage element object offset for each specific data chunk.

8. The method of any preceding claim, wherein the deduplication table stores chunk identifiers for a portion of data chunks that are associated with a first performance storage class, wherein the portion of data chunks comprises data chunks referenced by a threshold number of files or objects, or data chunks that were stored to the cloud storage within a particular period of time.

9. The method of any preceding claim, wherein the deduplication table is maintained at a cloud server that operates as a centralised processor, and wherein the cloud server receives data chunk metadata from a plurality of different client-side components to perform global deduplication for data from a plurality of different source systems.

10. The method of any preceding claim, wherein data chunks that are associated with a top performance storage class are deduplicated and include corresponding entries in the deduplication table, and wherein data chunks that are not associated with the top performance storage class are not deduplicated and do not include corresponding entries in the deduplication table.

11. The method of any preceding claim, wherein the specific data chunk is tracked using a snapshot tree comprising a root node, one or more intermediate nodes, and one or more leaf nodes, wherein a leaf node of the snapshot tree includes a pointer to a root node of a metadata structure, and wherein a leaf node of the metadata structure includes an identifier of a data brick associated with the specific data chunk and metadata associated with the specific data chunk.

12. A cloud server (113) comprising:
at least one processor; and
memory comprising instructions which, when executed by the at least one processor, cause the at least one processor to:
determine (602) to reduce a storage size of a deduplication table, wherein the deduplication table includes a plurality of entries, each entry associating a corresponding chunk identifier to a specific data chunk stored at a cloud storage;
identify (604) a specific entry to be removed from the deduplication table, wherein identifying the specific entry to be removed comprises determining that a current performance storage class associated with the specific data chunk should be modified to a lower performance storage class;
modify the current performance storage class for the specific data chunk to be the lower performance storage class; and
remove (606) the specific entry from the deduplication table while continuing to store the specific data chunk corresponding to the specific entry in the cloud storage.

13. The cloud server of claim 12, wherein determining to reduce the storage size of the deduplication table comprises determining that the storage size of the deduplication table has exceeded a threshold max size or periodically scanning the storage size of the deduplication table.

14. The cloud server of claim 12 or claim 13, wherein the specific entry is identified based on whether the specific entry has not been accessed within a threshold period of time.

15. A computer-readable medium comprising instructions that, when executed by one or more processors, cause the one or more processors to perform the method of any of claims 1 to 11.
